(19) Europäisches Patentamt / European Patent Office / Office européen des brevets

(11) **EP 4 674 916 A1**

(12) **EUROPEAN PATENT APPLICATION**

(43) Date of publication:
**07.01.2026 Bulletin 2026/02**

(21) Application number: **24186957.7**

(22) Date of filing: **05.07.2024**

(51) International Patent Classification (IPC):
**C09C 1/04** $^{(2006.01)}$ **C01G 9/02** $^{(2006.01)}$
**C09C 1/50** $^{(2006.01)}$

(52) Cooperative Patent Classification (CPC):
**C09C 1/043; B60C 1/00; C01G 9/02; C08L 9/06; C09C 1/50;** C01P 2002/85; C01P 2006/19

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Orion Engineered Carbons GmbH 65760 Eschborn (DE)**

(72) Inventors:
• **Westenberg, Hauke 50321 Brühl (DE)**
• **Timmermanns, Eddy 50354 Hürth (DE)**

(74) Representative: **f & e patent Braunsberger Feld 29 51429 Bergisch Gladbach (DE)**

(54) **RECOVERY OF ZINC OXIDE FROM ZINC CONTAINING CARBONACEOUS MATERIALS**

(57) The present disclosure relates to a process for recovering zinc oxide material from a zinc containing carbonaceous material, and a related process for producing carbon black with recovery of zinc oxide material. The associated products obtainable by these processes, including carbon black and particularly recovered zinc oxide material, and uses and applications thereof, including in particular vulcanizable rubber compositions and articles made therefrom are also described.

FIG. 3

EP 4 674 916 A1

**Description**

TECHNICAL FIELD

The present invention relates to recovering zinc oxide material from zinc containing carbonaceous materials, which may specifically be realized in a process for producing carbon black, and accordingly concerns a process for such recovery of zinc oxide material, a process for producing carbon black with such recovery of zinc oxide material, and associated products, including carbon black and particularly recovered zinc oxide material and uses and applications thereof, including e.g. vulcanizable rubber compositions and articles made therefrom.

TECHNICAL BACKGROUND

Zinc oxide is used in most kinds of rubber compositions which are cross-linked with sulphur. Zinc oxide serves herein as activator for the vulcanization process and enhances the vulcanization efficiency, reduces the vulcanization time and may enhance properties of the resulting vulcanizate. Zinc oxide is further used for example as pigment and/or anti-corrosion agent e.g. in paints and coatings, as catalyst in the chemical industry for certain chemical reactions such as alkylation, oxidation, hydrogenation and desulphurisation reactions, finds further use in making glasses and ceramics, and is used in certain cosmetic, medical, nutritional or pharmaceutical formulations and products, e.g. as a sunscreen or bacteriostatic agent. Zinc oxide therefore represents an important raw material that is used in large amounts, particularly in the rubber industry.

Zinc oxide is currently produced mainly by the direct process (also known as American process) or indirect process (also known as French process), and in minor quantities by wet chemical processes. In the direct process oxidic material containing zinc such as skimming or ashes from hot dip galvanization are used as starting materials, which are first reduced by carbon at high temperature and the volatilized zinc vapour is then oxidized to form zinc oxide. In the indirect process, zinc-based metallic material is used, which is melted, vaporized by boiling and oxidized in the vapour state to form zinc oxide, which is then precipitated. The resources of zinc and zinc-based starting materials in these processes are however limited. There is a desire to provide new process routes for efficiently producing zinc oxide, which enable using other materials.

Carbon black represents another raw material that is widely employed in industry as an additive for various different applications, for example as a colouring agent or pigment, reinforcing filler or conductive agent in the manufacture of paints, coatings, inks, electrodes or plastic or rubber articles. Carbon blacks are produced by controlled thermal or thermal-oxidative decomposition of hydrocarbon precursors such as oils, natural gas or acetylene. Established carbon black production processes include the furnace black process, the gas black process, the lamp black process, the acetylene process or the thermal black process, wherein more than 90% of all carbon blacks are currently produced by the furnace black process.

In the prior art, the feedstock for the production of carbon black in an entrained flow reactor, such as in a furnace reactor, is conventionally a liquid carbon-containing feedstock. Liquid carbon-containing feedstocks are for example liquid hydrocarbons, such as cracker oil like oils derived from a steam cracker or fluidized catalytic cracker. A use of particulate carbon-containing feedstocks has generally been considered problematic and less suitable as e.g. transformation of particulate carbon-containing feedstocks to gaseous components is considerably slower compared to liquid carbon-containing feedstocks such that it is deemed difficult to achieve suitable pyrolysis of particulate carbon-containing feedstocks.

Carbonaceous scrap materials such as scrap plastic or rubber materials are available in large amounts and low costs and can contain significant amounts of carbon black e.g. as reinforcing filler, conductive agent or pigment. For instance, end-of-life tires represent a major source of scrap rubber, available in huge amounts ending up frequently as landfill, being environmentally problematic. Efficient recycling of such scrap materials and recovery of components contained thereby to bring them to a new use is of continuous interest.

In one approach, scrap tire material can be pyrolyzed in a pyrolysis reactor. The pyrolysis is typically carried out at relatively low temperatures such as about 500 °C and a liquid, a gaseous, and a solid fraction obtained. The liquid fraction can then be used as feedstock to produce new or virgin carbon black (vCB) in an entrained flow reactor such as a furnace reactor.

US 2002/0117388 A1 relates to the aforementioned pyrolysis of scrap rubber materials including old tires. The aim of US 2002/0117388 A1 is to recover the components in the scrap rubber materials such as carbon black. After the pyrolysis, carbon black can be formed from the pyrolysis gas or liquid.

However, the solid yield of the pyrolysis at low temperatures is low and a subsequent manufacturing process is required to obtain carbon black from the liquid fraction of the pyrolysis. Additionally, the coke content and ash content of recovered carbon black after pyrolysis is undesirable.

Accordingly, it is an objective of the present invention to provide new processes for effectively producing zinc oxide material and/or carbon blacks, which overcome or alleviate at least some of the above-mentioned deficiencies and limitations of the prior art, enabling for instance producing zinc oxide material and/or carbon blacks in an efficient manner and/or using alternative starting materials or feedstocks, meeting economical and sustainability interests, ideally without adversely affecting the properties and applications of the products.

SUMMARY OF THE INVENTION

The present invention accordingly relates to a process for recovering zinc oxide material from a zinc containing carbonaceous material, the process comprising:

(a) providing a zinc containing carbonaceous material;
(b) heat treating the zinc containing carbonaceous material in a gas atmosphere to thereby transfer at least a part of the zinc contained by the carbonaceous material into the gas atmosphere; and
(c) depositing a zinc oxide material from said gas atmosphere.

Moreover, a process for producing carbon black with recovery of zinc oxide material is provided, the process comprising:

(a) supplying a zinc containing carbonaceous feedstock to a reactor;
(b) pyrolyzing the zinc containing carbonaceous feedstock in a gas atmosphere in the reactor to form and/or recover carbon black and transfer at least part of the zinc contained by the carbonaceous feedstock into the gas atmosphere;
(c) separating the formed and/or recovered carbon black from the gas atmosphere; and
(d) depositing a zinc oxide material from said gas atmosphere.

The zinc containing carbonaceous material or feedstock can in particular comprise or be a zinc containing carbonaceous scrap material and/or be provided in particulate form.

Furthermore, products obtainable by these processes as described above and in further detail below, that is a recovered zinc oxide material and carbon black, if applicable, are provided. In particular a recovered zinc oxide material obtainable by a process for recovering zinc oxide material or process for producing carbon black with recovery of zinc oxide material as described herein is provided.

Also within the scope is a process for manufacture of a zinc salt or compound making use of the recovered zinc oxide material, and the zinc salts or compounds different from zinc oxide obtainable thereby. The process comprises reacting the recovered zinc oxide material according to the present invention with one or more reactive agents to form a zinc salt or compound different from zinc oxide, such as a zinc soap, like fatty acid salts of zinc, such as for example zinc stearate or zinc palmitate.

The present disclosure also relates to compositions comprising one or more of the recovered zinc oxide material, zinc salt or compound different from zinc oxide obtained therefrom and/or carbon black made in accordance with the present invention. In particular, a vulcanizable rubber composition is provided, which comprises a vulcanizable rubber component and one or more of the recovered zinc oxide material, a zinc salt or compound formed therefrom and/or carbon black made in accordance with the present invention.

Articles prepared from such compositions are also within the scope of the present disclosure.

The present invention is further directed towards use of a zinc containing carbonaceous material, particularly a zinc containing carbonaceous scrap material, as a feedstock for producing carbon black and/or for recovering zinc oxide material.

It also concerns use of a recovered zinc oxide material of the present invention as vulcanization activator, pigment, UV light absorber, bacteriostat, corrosion inhibitor, catalyst, and/or for the production of plastic compositions, rubber compositions, glass, ceramics, cements, paints, sunscreens, medical, pharmaceutical or cosmetic products, food supplements, pigments, or zinc compounds or salts, such as zinc soaps.

The present invention also relates to use of a recovered zinc oxide material and/or a zinc salt or compound formed therefrom as described herein in the formulation of vulcanizable rubber compositions, for example as partial or full substitute to virgin zinc oxide or virgin zinc salts or compounds. The carbon black made according to the present invention can likewise be used in the formulation of vulcanizable rubber compositions.

It has surprisingly been found that zinc oxide material can be recovered according to the present invention in an efficient and economical and environmental beneficial manner from a zinc containing carbonaceous material, in particular a zinc containing carbonaceous scrap material such as rubber from used tires or other waste rubber or waste plastic materials. Advantageously, such recovery of zinc oxide can effectively be implemented in a process for production of carbon black, enabling to produce thereby both, a carbon black product and a recovered zinc oxide material from such a zinc containing carbonaceous material, which can in contrast to conventional liquid or gaseous feedstocks used to produce carbon black be provided in particulate form. The recovered zinc oxide material and carbon black obtainable according to the present invention can moreover exhibit properties comparable or even better compared to conventional zinc oxide or carbon black rendering them interesting in all fields of use where zinc oxide or carbon black are commonly employed, e.g. as a cost-effective substitute to conventional zinc oxide or carbon black materials. In particular, the recovered zinc oxide material and/or carbon black obtainable according to the present invention can advantageously be used in vulcanizable rubber compositions. For instance, the recovered zinc oxide material has surprisingly been found to be very effective in promoting the vulcanization reaction and can even have a higher activity than virgin zinc oxide material conventionally employed as activator for the vulcanization of rubber compounds.

These and other optional features and advantages of the present invention are described in more detail in the following description.

BRIEF DESCRIPTION OF THE DRAWINGS

Figure 1 shows a cross-sectional view of a furnace reactor that can be used according to the present invention;

Figure 2 shows a cross-sectional view of a feeding and mixing device comprising a nozzle that can be used according to the present invention;

Figure 3 shows curves of storage torque as a function of the time at a curing temperature of 165°C measured with a moving die rheometer for a vulcanizable rubber composition comprising a recovered zinc oxide material according to the present invention (Example 1) versus a corresponding vulcanizable rubber composition comprising a conventional virgin zinc oxide material as a reference (Comparative Example 2).

DETAILED DESCRIPTION

As used herein, the term "comprising" is understood to be open-ended and to not exclude the presence of additional undescribed or unrecited elements, materials, ingredients or method steps. The terms "including", "containing" and like terms are understood to be synonymous with "comprising". As used herein, the term "consisting of" is understood to exclude the presence of any unspecified element, ingredient or method step.

As used herein, the singular form of "a", "an", and "the" include plural referents unless the context clearly dictates otherwise.

Unless indicated to the contrary, the numerical parameters and ranges set forth in the following specification and appended claims are approximations. Notwithstanding that the numerical ranges and parameters setting forth the broad scope of the invention are approximations, the numerical values set forth in the specific examples are reported as precisely as possible. Any numerical values, however, contain errors necessarily resulting from the standard deviation in their respective measurement.

Also, it should be understood that any numerical range recited herein is intended to include all subranges subsumed therein. For example, a range of "1 to 10" is intended to include any and all sub-ranges between and including the recited minimum value of 1 and the recited maximum value of 10, that is, all subranges beginning with a minimum value equal to or greater than 1 and ending with a maximum value equal to or less than 10, and all subranges in between, e.g. 1 to 6.3, or 5.5 to 10, or 2.7 to 6.1.

All parts, amounts, concentrations etc. referred to herein are by weight, unless specified otherwise.

As mentioned above, the present invention relates to a process for recovering zinc oxide material from a zinc containing carbonaceous material.

As used herein, "carbonaceous material" means any material, which is based on carbon, in elemental form and/or in carbon-containing compounds, as main constituent. The zinc containing carbonaceous material can for example have a carbon content of 50 wt.% or more, such as 60 wt.% or more, or 65 wt.% or more, or 70 wt.% or more, or 75 wt.% or more, or 80 wt.% or more, or 85 wt.% or more, or 90 wt.% or more, or 95 wt.% or more, or 97 wt.% or more, or 98 wt.% or more, based on the total weight of the zinc containing carbonaceous material. The zinc containing carbonaceous material can for example have a carbon content of up to 99.9 wt.%, such as 99.5 wt.% or less, or 99 wt.% or less, or 98 wt.% or less, or 97 wt.% or less, or 95 wt.% or less. The zinc containing carbonaceous material may have a carbon content in a range between any of the recited values, such as in a range from 50 wt.% to 99.9 wt.%, or from 70 wt.% to 95 wt.%, or from 75 to 90 wt.%. The carbon content can be determined by elemental analysis. The carbon content of the carbonaceous material, as specified above, can herein be provided by one or more organic material(s), one or more inorganic carbon-based material(s), or a mixture or combination thereof as carbon source. The carbon source(s) may serve as a carrier for the zinc component of the zinc containing carbonaceous material, which can be effectively heated and/or pyrolyzed to thereby promote transfer of the zinc into the gas atmosphere. Moreover, the carbon source(s) may serve as a source of carbon black, as described herein.

Examples of organic compounds are C,H-containing compounds, which may optionally further comprise one or more heteroatom(s) such as O, N, S or P. These organic compounds may pyrolyze and newly form carbon black. Preferred organic materials are polymeric materials, such as thermoplastic, thermosetting or elastomeric polymeric materials. The zinc containing carbonaceous material can accordingly in particular comprise a polymeric or plastic material as carbon source. Any organic plastic material known in the art can be used. Thermoplastic as well as duroplastic or thermoset polymers or polymer mixtures or blends can be employed. For example, the plastic material can comprise acrylics such as poly(acrylic acid), or poly(methyl methacrylate), epoxies, polyurethanes, polyamides, polyesters such as polyethylene terephthalate, polycarbonates, polysulfones, polyimides, polyethers, such as polyether sulfone, and polyolefins such as light, medium and high density polyethylene, ethylene-propylene copolymers, either with random or block configuration, polypropylene-maleic acid anhydride, polystyrene, styrene-acrylonitrile copolymers, acrylonitrile-butadiene-styrene copolymers, ethylene vinyl acetate, ethylene-acrylic acid copolymers, vinyl chloride-polypropylene copolymers, polyisobutylene, polybutadiene, and crosslinked polyethylene, whether chemically, thermally, UV or E-beam (EB) crosslinked, and polyphenylene sulfide, polyetheretherketone, polyetherimide, polyarylsulfone and polypropylene oxide modified polyether sulfones.

Particularly preferable, the zinc containing carbonaceous material can comprise one or more elastomers such as rubber materials, in particularly elastomer materials vulcanized with sulphur. The rubbers or elastomers can contain olefinic unsaturation, such as in case of diene-based rubbers or elastomers. Exemplary rubber materials include, but are not limited to natural and synthetic rubbers such as styrene-butadiene-copolymers, emulsion-styrene-butadiene rubber (ESBR), solution-styrene-butadiene rubber (SSBR), ethylene propylene diene monomer (EPDM) rubber, ethylene-propylene rubber (EPM), polybutadiene, polyisoprene, butyl rubber, chloroprene rubber, nitrile rubber, acrylonitrile-butadiene rubber, hydrogenated acrylonitrile-butadiene rubber, polymers and copolymers of butadiene, isoprene, piperylene and isomonoolefin with styrene or a methylstyrene, and halogenated rubber products such as halogenated butyl rubber, chlorinated polyethylene, or chlorosulfonated polyethylene, ethylene-vinylacetate rubber, ethylene-acrylic rubber, epichlorohydrin rubber, or a combination of any of the foregoing. The polymeric material can comprise only one polymer or a mixture of two or more different polymers such as for example a mixture of natural and synthetic rubber.

The one or more organic compounds such as plastic and/or rubber material(s) can comprise 10 wt.% or more, such as 20 wt.% or more, or 30 wt.% or more, or 40 wt.% or more, or 50 wt.% or more, or 60 wt.% or more, or 70 wt.% or more, or 80 wt.% or more, or 90 wt.% or more, based on the total weight of the carbon source(s) present in the zinc containing carbonaceous material. The one or more organic compounds such as plastic and/or rubber material(s) can comprise up to 100 wt.%, such as 99 wt.% or less, or 98 wt.% or less, or 95 wt.% or less, or 90 wt.% or less, or 80 wt.% or less, or 70 wt.% or less, or 60 wt.% or less, based on the total weight of the carbon source(s) present in the zinc containing carbonaceous material. The zinc containing carbonaceous material may comprise the one or more organic compounds such as plastic and/or rubber material(s) in an amount in a range between any of the recited values, such as in a range from 10 to 100 wt.%, or from 20 to 98 wt.%, or from 50 to 95 wt.%, or from 60 to 90 wt.%, based on the total weight of the carbon source(s) present in the zinc containing carbonaceous material.

As mentioned above, the zinc containing carbonaceous material can alternatively or in addition to organic material, such as plastic and/or rubber material, comprise one or more inorganic carbon-based materials as carbon source. Examples of inorganic carbon-based materials include for instance carbon black, activated carbon, graphite, soot, coke, coal, char, carbon nanoparticles or any other carbon-based inorganic material. The inorganic carbon-based material can for instance be used as a filler or additive in a plastic or rubber material. For example, plastic or rubber compositions frequently contain carbon black as reinforcing filler conductive agent and/or pigment. Alternatively, the inorganic carbon-based material may be used as such, for example after recovering it from a plastic or rubber material it was incorporated in as filler or additive.

The inorganic carbon-based material(s) such as carbon black can comprise 0.5 wt.% or more, such as 1 wt.% or more, or 2 wt.% or more, or 3 wt.% or more, or 5 wt.% or more, or 10 wt.% or more, or 15 wt.% or more, or 20 wt.% or more, or 30 wt.% or more, or 50 wt.% or more, based on the total weight of the carbon source(s) present in the zinc containing carbonaceous material. The inorganic carbon-based material(s) can comprise up to 100 wt.%, such as 99 wt.% or less, or 98 wt.% or less, or 95 wt.% or less, or 90 wt.% or less, or 80 wt.% or less, or 70 wt.% or less, or 60 wt.% or less, or 50 wt.% or less, or 40 wt.% or less, or 30 wt.% or less, or 20 wt.% or less, based on the total weight of the carbon source(s) present in the zinc containing carbonaceous material. The zinc containing carbonaceous material may comprise the inorganic carbon-based material(s) in an amount in a range between any of the recited values, such as in a range from 0.5 to 100 wt.%, or from 1 to 70 wt.%, or from 5 to 60 wt.%, or from 10 to 50 wt.%, or from 15 to 40 wt.%, based on the total weight of the carbon source(s) present in the zinc containing carbonaceous material.

The zinc containing carbonaceous material used according to the present invention is characterized in that it further comprises zinc. The zinc can be present in elemental form, and/or in bound form, that is bound in zinc compounds and/or salts. Preferably, the zinc component comprises one or more zinc compound and/or zinc salt, for example originating from its use as additive in the material such as for activation of vulcanization or as pigment or processing aid. The one or more zinc compounds or zinc salts can include organo zinc compounds or salts, inorganic zinc compounds or salts, or a mixture or combination thereof. Non-limiting examples of zinc compounds or zinc salts that can be present in the zinc containing carbonaceous material are for instance zinc oxide, zinc hydroxide, zinc sulfide, organic complexes of zinc, and fatty acid salts of zinc. The zinc containing carbonaceous material generally comprises a notable amount of zinc to achieve a suitable yield of recovered zinc oxide material. On the other hand, a too high zinc content may adversely affect pyrolysis of the carbonaceous material and thereby the volatilization of the zinc component and/or the formation of carbon black. The zinc containing carbonaceous material accordingly typically comprises 0.1 wt.% or more, such as 0.2 wt.% or more, or 0.3 wt.% or more, or 0.5 wt.% or more, or 0.7 wt.% or more, or 1.0 wt.% or more, or 1.5 wt.% or more, or 2.0 wt.% or more, of zinc, based on the total weight of the zinc containing carbonaceous material. The zinc containing carbonaceous material moreover typically comprises zinc in an amount of 10.0 wt.% or less, such as 7.0 wt.% or less, or 5.0 wt.% or less, or 4.0 wt.% or less, or 3.5 wt.% or less, or 3.0 wt.% or less, based on the total weight of the zinc containing carbonaceous material. The zinc containing carbonaceous material may comprise zinc in a range between any of the recited values, such as in a range from 0.1 wt.% to 10 wt.%, preferably from 0.3 wt.% to 5.0 wt.%, or from 0.5 to 4.0 wt.%, or from 1.0 wt.% to 3.0 wt.%. The amounts of zinc as recited herein relate to the amount of zinc determined as elemental metal, irrespective of the form in which the zinc is actually present in the zinc containing carbonaceous material. The amount of zinc can be determined as described in the examples.

The zinc containing carbonaceous material can optionally comprise one or more further components in addition to the above-mentioned carbon source(s) and the zinc component. Such further components can include for example metals other than zinc such as alkali metals, earth alkaline metals, silicon, aluminium, and/or iron as well as salts and/or compounds thereof. The zinc containing carbonaceous material typically contains such further components in a total amount of 40 wt.% or less, such as 30 wt.% or less, or 20 wt.% or less, or 15 wt.% or less, or 10 wt.% or less, based on the total weight of the zinc containing carbonaceous material. The zinc containing carbonaceous material may for example comprise such further components in a total amount of 1 wt.% or more, such as 2 wt.% or more, or 3 wt.% or more, or 4 wt.% or more, or 5 wt.% or more, based on the total weight of the zinc containing carbonaceous material. The zinc containing carbonaceous material may comprise such further components in a total amount in a range between any of the recited values, such as in a range from 1 wt.% to 40 wt.%, or from 3 wt.% to 20 wt.%, or from 5 wt.% to 10 wt.%.

The zinc containing carbonaceous material used according to the present invention preferably comprises or is a scrap material. Scrap material encompasses any waste material, for example from production processes or end-of-life goods. The zinc containing carbonaceous material can for example comprise organic scrap material. The organic scrap material can be scrap made of any organic material described above as carbon source, such as a scrap plastic material and/or scrap rubber material. Alternatively or in addition, the zinc containing carbonaceous material can include an inorganic carbon-based scrap material. The inorganic carbon-based scrap material can be made of any of the inorganic carbon-based materials described above as carbon source. An example of an inorganic carbon-based scrap material would thus be used carbon black. The used carbon black could for instanced be present in a scrap plastic or rubber material, or be obtained therefrom, e.g. by respective recycling processes.

According to the present invention the zinc containing carbonaceous material can in particular be provided in particulate form. This can be done by milling to the desired particle or granulate size. The zinc containing carbonaceous material can in particular comprise or be a plastic granulate, rubber granulate or a combination or mixture thereof, wherein the plastic granulate and/or rubber granulate can optionally comprise an inorganic carbon-based material such as carbon black. The zinc containing carbonaceous material used according to the present invention preferably comprises or is a particulate scrap material. The particulate scrap material can in particular comprise or be a granulate of scrap plastic, granulate of scrap rubber or a combination or mixture thereof. Rubber granulate can for example be made from end-of-life tires, cable sheaths, tubes, conveyor belts, shoe soles, hoses and other rubber goods, or other waste rubber, or mixtures or combinations of any of the foregoing. Plastic granulates can for instance be derived from used plastic packaging like plastic bags, foils, containers, casings etc., from household or industrial sources, end-of-life plastic goods or other waste plastic, or mixtures or combinations of any of the foregoing. Particularly preferred according to the present invention is the use of rubber granulate made from scrap tires and/or other waste rubber. The scrap tires can be milled to obtain a particulate rubber granulate. Generally, the zinc containing carbonaceous material can be provided with a controlled particle size distribution, as set forth in the following.

It is desired that at least 50 wt.-%, preferably at least 60 wt.-%, more preferably at least 70 wt.-%, most preferably at least 80 wt.-%, of the particulate zinc containing carbonaceous material has a particle size of 125 μm to 2 mm, preferably 125 μm to 1 mm, more preferably 250 μm to 1 mm, and most preferably 500 μm to 1000 μm, wherein the particle size is measured according to ASTM D 1511-12 (2017).

It is desired that at least 70 wt.-%, preferably at least 80 wt.-%, more preferably at least 90 wt.-%, most preferably at least 98 wt.-%, of the particulate zinc containing carbonaceous material has a particle size of less than 2 mm, preferably less than 1 mm, more preferably less than 500 μm, and most preferably less than 250 μm, wherein the particle size is measured according to ASTM D 1511-12 (2017).

It is desired that at least 70 wt.-%, preferably at least 80 wt.-%, more preferably at least 90 wt.-%, most preferably at least 98 wt.-%, of the particulate zinc containing carbonaceous material has a particle size of less than 500 $\mu$m, wherein the particle size is measured according to ASTM D 1511-12 (2017).

It is desired that at least 70 wt.-%, preferably at least 80 wt.-%, more preferably at least 90 wt.-%, most preferably at least 98 wt.-%, of the particulate zinc containing carbonaceous material has a particle size of less than 1 mm, wherein the particle size is measured according to ASTM D 1511-12 (2017).

It is desired that at least 70 wt.-%, preferably at least 80 wt.-%, more preferably at least 90 wt.-%, most preferably at least 98 wt.-%, of the particulate zinc containing carbonaceous material has a particle size of less than 2 mm, preferably less than 250 $\mu$m, wherein the particle size is measured according to ASTM D 1511-12 (2017).

It is desired that less than 1 wt.-%, preferably at least 0.5 wt.-%, more preferably less than 0.1 wt.-%, most preferably less than 0.01 wt.-%, of the particulate zinc containing carbonaceous material has a particle size of more than 2 mm, preferably more than 1 mm, more preferably more than 500 $\mu$m, and most preferably more than 250 $\mu$m, wherein the particle size is measured according to ASTM D 1511-12 (2017).

It is particularly preferred that the particulate zinc containing carbonaceous material has a particle size of less than 2 mm, preferably less than 1 mm, more preferably less than 500 $\mu$m, and most preferably less than 250 $\mu$m, wherein the particle size is measured according to ASTM D 1511-12 (2017).

The particle size of the zinc containing carbonaceous material can be controlled by classifying the particulate zinc containing carbonaceous material, before the particulate zinc containing carbonaceous material is heat treated, e.g. in a reactor. The classification can be done by any means known in the art such as sieving or other means for classification. Classification can for example be performed using a vibratory screener, rotary screener, cyclone, elutriation classifier, air jet sieve and/or dynamic air classifier or a combination of any of the foregoing. Said classification can be used in order to obtain a maximum or minimum desired particle size as described herein.

The particle size of the zinc containing carbonaceous material can be controlled by sieving the particulate carbon-containing feedstock before the particulate carbon-containing feedstock is heat treated, e.g. in a reactor. The sieve sizes as described in ASTM D 1511-12 (2017) can be used. For instance, sieves having openings of 2,000 $\mu$m, 1,000 $\mu$m, 500 $\mu$m, 250 $\mu$m, or 125 $\mu$m, preferably 500 $\mu$m, 250 $\mu$m, or 125 $\mu$m, can be used. Moreover, the sieve can have openings with a size that restrains particles with a size of more than 2,000 $\mu$m, more than 1,000 $\mu$m, more than 500 $\mu$m, more than 250 $\mu$m, or more than 125 $\mu$m, preferably more than 500 $\mu$m, more than 250 $\mu$m, or more than 125 $\mu$m.

No more than 10 wt.-%, preferably no more than 5 wt.-%, more preferably no more than 4 wt.-%, and most preferably no more than 2 wt.-% of the particulate zinc containing carbonaceous material should have a particle size of over 4 mm, preferably over 2 mm, more preferably over 1 mm, and most preferably over 0.5 mm, wherein the particle size is measured according to ASTM D 1511-12 (2017).

No more than 10 wt.-%, preferably no more than 5 wt.-%, more preferably no more than 4 wt.-%, and most preferably no more than 2 wt.-% of the particulate zinc containing carbonaceous material should have a particle size of less than 150 $\mu$m, preferably less than 125 $\mu$m, more preferably less than 110 $\mu$m, and most preferably less than 100 $\mu$m, wherein the particle size is measured according to ASTM D 1511-12 (2017).

The particle size distribution of the particulate zinc containing carbonaceous material can be measured according to ASTM D 1511-12 (2017) and (a) Sieve No. 10 retains 1 to 10 wt.-%, preferably 1 to 8 wt.-%, more preferably 1 to 5 wt.-%, and most preferably 1 to 3 wt.-% of the particulate zinc containing carbonaceous material, and/or (b) Sieve No. 18 retains 1 to 25 wt.-%, preferably 2 to 20 wt.-%, more preferably 4 to 15 wt.-%, and most preferably 5 to 12 wt.-% of the particulate zinc containing carbonaceous material, and/or (c) Sieve No. 35 retains 10 to 80 wt.-%, preferably 15 to 70 wt.-%, more preferably 20 to 60 wt.-%, and most preferably 25 to 55 wt.-% of the particulate zinc containing carbonaceous material, and/or (d) Sieve No. 60 retains 5 to 70 wt.-%, preferably 10 to 60 wt.-%, more preferably 15 to 50 wt.-%, and most preferably 20 to 45 wt.-% of the particulate zinc containing carbonaceous material, and/or (e) Sieve No. 120 retains 1 to 80 wt.-%, preferably 7 to 70 wt.-%, more preferably 5 to 60 wt.-%, and most preferably 7 to 50 wt.-% of the particulate zinc containing carbonaceous material, and/or (f) Bottom receive pan comprises less than 4 wt.-%, preferably less than 3 wt.-%, more preferably 0 to 2 wt.-%, and most preferably 0.01 to 1 wt.-% of the particulate zinc containing carbonaceous material. It is desirable to choose the desired range for each sieve independently.

The 50 wt.-% cumulative particle size of the particulate carbon-containing feedstock should be from 100 $\mu$m to 4 mm preferably 100 $\mu$m to 3 mm, more preferably 100 $\mu$m to 2 mm, and most preferably 100 $\mu$m to 500 $\mu$m, wherein the 50 wt.-% cumulative particle size is measured according to ASTM D 1511-12 (2017). The 50 wt.-% cumulative particle size can be interpolated using standard techniques know in the art. It is particularly, preferred that the Rosin-Rammler-Sperling-Bennett distribution (RRSB distribution) is used to interpolate the 50 wt.-% cumulative particle size.

The weight average particle size Dw50 of the particulate zinc containing carbonaceous material can be from 100 $\mu$m to 4 mm, preferably 100 $\mu$m to 3 mm, more preferably 100 $\mu$m to 2 mm, and most preferably 100 $\mu$m to 500 $\mu$m, wherein the weight average particle size Dw50 is measured according to ASTM D 1511-12 (2017).

The particle size distribution Dw10 of the particulate zinc containing carbonaceous material can be from 100 $\mu$m to 250 $\mu$m, preferably 110 $\mu$m to 220 $\mu$m, more preferably 120 $\mu$m to 210 $\mu$m, and most preferably 130 $\mu$m to 200 $\mu$m,

wherein the particle size distribution Dw10 is measured according to ASTM D 1511-12 (2017).

The particle size distribution of the particulate zinc containing carbonaceous material Dw90 can be from 400 $\mu$m to 4 mm, preferably 500 $\mu$m to 3 mm, more preferably 600 $\mu$m to 2 mm, and most preferably 700 $\mu$m to 500 $\mu$m, wherein the particle size distribution Dw90 is measured according to ASTM D 1511-12 (2017).

The span of the particle size distributions of the particulate zinc containing carbonaceous material (Dw90-Dw10) / Dw50 can be 0.2 to 1.8, preferably 0.3 to 1.3, more preferably 0.4 to 1.1, most preferably 0.4 to 1.0, wherein the particle size distributions Dw10, Dw50, and Dw90 are measured according to ASTM D 1511-12 (2017).

The Dw50, Dw10, and Dw90 can be interpolated using standard techniques know in the art. It is particularly, preferred that the Rosin-Rammler-Sperling-Bennett distribution (RRSB distribution) is used to interpolate the Dw50, Dw10, and Dw90.

The particle or granulate size may have an influence on the heating rate of the zinc containing carbonaceous material and/or the transfer of the zinc component contained thereby to the gas atmosphere. Smaller granulates or particles have a higher specific surface area so that the heating rate and volatilization can be higher. A fast-heating rate may be beneficial so that the zinc containing carbonaceous material can efficiently evaporate and be pyrolyzed.

Generally, the provided zinc containing carbonaceous material, which can be as described above, is heat treated in a gas atmosphere. By the heat treatment at least a part of the zinc contained by the carbonaceous material can be transferred into the gas atmosphere.

The gas atmosphere in which the zinc containing carbonaceous material is heat treated typically comprises one or more oxygen-containing species. Non-limiting examples of oxygen-containing species include oxygen, ozone, water, CO, $CO_2$, $NO_x$ and $SO_x$. The oxygen-containing species can serve as oxygen source, for example for pyrolysis of the carbonaceous material and/or reaction with volatilized zinc to form zinc oxide. Alternatively or in addition, the zinc containing carbonaceous material itself may comprise one or more oxygen sources, for example in the form of oxygen-containing organic materials and/or inorganic oxides, such as metal oxides. The gas atmosphere in which the zinc containing carbonaceous material is heat treated may for example comprise oxygen-containing species in an amount of 1 vol.% or more, such as 3 vol.% or more, or 5 vol.% or more, or 10 vol.% or more, or 15 vol.% or more. The gas atmosphere in which the zinc containing carbonaceous material is heat treated may comprise oxygen-containing species in an amount of up to 100 vol.%, such as 70 vol.% or less, or 40 vol.% or less, or 30 vol.% or less, or 25 vol.% or less, or 20 vol.% or less. The gas atmosphere in which the zinc containing carbonaceous material is heat treated may contain oxygen-containing species in a range between any of the recited values, such as in a range from 1 to 100 vol.%, or from 3 to 50 vol.%, or from 5 vol.% to 30 vol.%, or from 10 to 25 vol.%. The gas atmosphere in which the zinc containing carbonaceous material is heat treated typically comprises oxygen. It may for example comprise oxygen in an amount of 1 vol.% or more, or 2 vol.% or more, or 3 vol.% or more, or 4 vol.% or more, or 5 vol.% or more, or 7 vol.% or more, or 10 vol.% or more. The gas atmosphere in which the zinc containing carbonaceous material is heat treated can for example comprise oxygen in an amount of 40 vol.% or less, or 30 vol.% or less, or 25 vol.% or less, or 20 vol.% or less, or 15 vol.% or less. The gas atmosphere in which the zinc containing carbonaceous material is heat treated may comprise oxygen in an amount in a range between any of the recited values, such as in a range from 1 to 40 vol.%, or from 2 to 25 vol.%, or from 5 to 20 vol.%.

The gas atmosphere in which the zinc containing carbonaceous material is heat treated may comprise, alternatively or in addition to the above-mentioned one or more oxygen-containing species, one or more non-oxygen containing species. Non-limiting examples of non-oxygen containing species include nitrogen, hydrogen, $H_2S$, argon and hydrocarbons such as methane, ethane, ethylene and acetylene. The gas atmosphere in which the zinc containing carbonaceous material is heat treated may for example comprise non-oxygen containing species in an amount of 30 vol.% or more, such as 60 vol.% or more, or 70 vol.% or more. The gas atmosphere in which the zinc containing carbonaceous material is heat treated may comprise non-oxygen containing species in an amount of up to 100 vol.%, such as 97 vol.% or less, or 95 vol.% or less, or 90 vol.% or less, or 85 vol.% or less or less. The gas atmosphere in which the zinc containing carbonaceous material is heat treated may contain non-oxygen containing species in a range between any of the recited values, such as in a range from 30 to 100 vol.%, or from 60 to 97 vol.%, or from 70 vol.% to 90 vol.%. The gas atmosphere in which the zinc containing carbonaceous material is heat treated typically comprises nitrogen. It may for example comprise nitrogen in an amount of 30 vol.% or more, or 50 vol.% or more, or 60 vol.% or more. The gas atmosphere in which the zinc containing carbonaceous material is heat treated can for example comprise nitrogen in an amount of 100 vol.% or less, or 90 vol.% or less, or 80 vol.% or less. The gas atmosphere in which the zinc containing carbonaceous material is heat treated may comprise nitrogen in an amount in a range between any of the recited values, such as in a range from 30 to 100 vol.%, or from 50 to 90 vol.%, or from 60 to 80 vol.%.

The pressure of the gas atmosphere in which the heat treatment is carried out is not particularly limited and can vary. The process of the present invention can be carried out at pressures about the atmospheric pressure or moderate overpressure. The atmospheric pressure under standard conditions is 1,013.25 hPa. The heat treatment of the zinc containing carbonaceous material can accordingly be carried out in a gas atmosphere which has a pressure corresponding to about atmospheric pressure, for example within ±20% of the atmospheric pressure, or moderate overpressure. The gas atmosphere can for example have a pressure of 500 hPa or more, 800 hPa or more, 900 hPa or more, or 1,000 hPa or more. It can have for example a pressure of 2,000 hPa or less, such as 1,500 hPa or less, or 1,200 hPa or less. The gas atmosphere in which the zinc containing carbonaceous material is heat treated, can also be a vacuum atmosphere. Vacuum atmosphere means a gas atmosphere, which is under a vacuum, that is which has a subatmospheric pressure. The applied vacuum is not particularly limited and can comprise low vacuum, moderate vacuum, high vacuum or ultra-high vacuum. Due to cost reasons low to high vacuum, in particular low or moderate vacuum, may preferably be used. The atmosphere in which the heat treatment is carried out can for example have a pressure of 100 hPa or less, such as 10 hPa or less, or 1 hPa or less, or 0.1 hPa or less, or 0.01 hPa or less. The atmosphere in which the heat treatment is carried out can for example have a pressure of $10^{-9}$ hPa or more, or $10^{-6}$ hPa or more, or $10^{-5}$ hPa or more, or $10^{-4}$ hPa or more, or 0.001 hPa or more. The atmosphere in which the zinc containing carbonaceous material is heat treated can have a pressure in a range between any of the above-mentioned values such as in a range from $10^{-9}$ hPa to 2,000 hPa, or from $10^{-5}$ hPa to 10 hPa, or from 0.001 hPa to 10 hPa, or from 1 to 100 hPa, or from 1 hPa to 1,500 hPa, or from 800 hPa to 1,500 hPa.

The heat treatment of the zinc containing carbonaceous material can be conducted in a static gas atmosphere or, more preferably, in a gas flow. Accordingly, the heat treatment of the zinc containing carbonaceous material in the process according to the present invention can optionally comprise subjecting the treated zinc containing carbonaceous material to a gas flow, such as a continuous gas flow. Heat treating of the zinc containing carbonaceous material can therefore be conducted in a gas flow, such as a continuous gas flow, in particular of a gas atmosphere as described above. The average gas flow rate can vary widely, e.g. depending on the size of the apparatus used and/or the amount of zinc containing carbonaceous material that is heat treated therein. The average flow rate of the gas can for example be 1 NL/h or more, such as 5 NL/h or more, or 20 NL/h or more, or 50 NL/h or more, or 100 NL/h or more, or 500 NL/h or more, or 1,000 NL/h or more, or 5,000 NL/h or more, or 10,000 NL/h or more, or 50,000 NL/h or more, or 100,000 NL/h or more. For example, the average flow rate of the gas can be 50,000,000 NL/h or less, such as 25,000,000 NL/h or less, or 15,000,000 NL/h or less, or 10,000,000 NL/h or less, or 5,000,000 NL/h or less, or 1,000,000 NL/h or less, or 100,000 NL/h or less, or 20,000 NL/h or less, or 5,000 NL/h or less, or 2,000 NL/h or less, or 1,000 NL/h or less. The average flow rate can be in a range between any of the recited values, such as in a range from 5 NL/h to 50,000,000 NL/h, or from 1,000 NL/h to 15,000,000 NL/h, or from 100,000 NL/h to 10,000,000 NL/h. The average flow rate of the gas is calculated based on the total volume which the supplied amount of the gas would have under standard conditions (101.325 kPa, 0°C) and the treatment time. The volume of gas can be measured for example by a mass flow meter, which measures the amount of gas per unit time at a certain temperature and pressure, e.g. at room temperature and atmospheric pressure. Integration over time yields then the total volume of gas. The measured total volume of gas can then be converted to a total volume of gas under standard conditions by using the ideal gas law. The total volume of gas under standard conditions expressed in norm litres [NL] is divided by the total treatment time to calculate the average flow rate under standard conditions.

The heat treatment of the zinc containing carbonaceous material in a gas atmosphere as described above can be conducted at any temperature suitable for transferring at least a part of the zinc contained by the carbonaceous material into the gas atmosphere. Heat treating of the zinc containing carbonaceous material can also comprise pyrolyzing at least a part of the carbonaceous material. The heat treatment may in particular comprise heat treating the zinc containing carbonaceous material at a temperature of 800 °C or more, such as 900 °C or more, or 1,000°C or more, such as 1,100°C or more, or 1,200°C or more, or 1,300°C or more, or 1,400°C or more, or 1,500°C or more, or 1,800°C or more. The heat treatment may in particular comprise heat treating the zinc containing carbonaceous material at a temperature of up to 3,500°C, such as 3,000°C or less, or 2,700°C or less, or 2,500°C or less, or 2,000°C or less, or 1,900°C or less, or 1,800°C or less, or 1,700°C or less. The heat treatment may comprise heat treating the zinc containing carbonaceous material at a temperature in a range between any of the recited values. The zinc containing carbonaceous material can for example be heat treated at a temperature in a range from 800°C to 3,500°C, or from 1,000°C to 3,000°C, preferably from 1,400°C to 2,700°C, more preferably from 1,800 to 2,500°C. At temperatures below 800°C the zinc component contained by the carbonaceous material often may not volatilize or only at slow rates and/or such low temperatures may be insufficient for pyrolysis of the carbonaceous material. On the other hand very high temperatures are difficult to handle, impose demanding requirements for the used equipment, and may not be desirable from an efficiency standpoint. Conducting the heat treatment at temperatures above 3,500°C is therefore not desirable, and typically a temperature of 3,000°C or less is used for heat treating the zinc containing carbonaceous material.

The heat treatment of the zinc containing carbonaceous material can be carried out with any equipment or device available for heat treating materials, particularly particulate materials, under conditions as set out herein. For example, the heat treatment of the zinc containing carbonaceous material can be conducted, without being limited thereto, utilizing a convective oven, electric oven, infrared oven, gas fired oven, vacuum oven, conveyor oven, batch oven, fixed bed reactor, fluidized bed reactor, rotary kiln, Auger reactor plasma reactor, vertical reactor or an entrained flow reactor, or a combination thereof. As described in more detail further below, the process according to the present invention can in particular be carried out in a reactor for producing carbon black such as a furnace reactor or a vertical reactor for producing carbon black. Reactors for producing carbon black, such as furnace reactors and vertical reactors are described for example in Industrial Carbon and Graphite Materials: Raw Materials, Production and Applications, 1st edition, 2021, Wiley VCH, vol. II, Chapter 10 "Carbon Black". The apparatus used for the heat treatment should generally be constructed to withstand the temperatures and conditions used in the thermal treatment according to the process of the present invention. The heat treatment apparatus may comprise heating means for controlling the temperature in the heat treatment step. The heating means can be any conventional heating means such as electrical heating means, radiative heating means or means for generating and/or contacting with a hot medium. The heat treatment apparatus may comprise a treatment chamber, in which the zinc containing carbonaceous material may be provided for the heat treatment. The treatment chamber can for example have a volume of 0.1 L or more, or 0.5 L or more, or 1 L or more, or 5 L or more, or 10 L or more, or 50 L or more, or 100 L or more, or 200 L or more, or 500 L or more. The treatment chamber can for example have a volume of 100,000 L or less, or 60,000 L or less, or 40,000 L or less, or 20,000 L or less, or 10,000 L or less, or 5,000 L or less, or 1,000 L or less. The volume of the treatment chamber can be in a range between any of the recited values such as in a range from 0.1 L to 100,000 L, or from 1 L to 60,000 L, or from 10 L to 20,000 L. The heat treatment apparatus can comprise a single treatment chamber or two or more treatment chambers. Providing a zinc containing carbonaceous material can comprise introducing an amount of said zinc containing carbonaceous material into the treatment chamber(s) of the apparatus. Typically, the treatment chamber(s) is fed with the gas atmosphere, through one or more inlets connected to one or more feeding lines from one or more sources. Optionally, a vacuum can be generated in the treatment chamber(s), e.g. by a connected pump. The heat treatment apparatus may further comprise conventional means for flow and/or process control such as sensors, pressure or flow regulation means, valves, and controllers. The one or more than one treatment chamber(s) may be designed such that a flow of gas may be forced through the zinc containing carbonaceous material to be treated, such as to form a fluidized bed, rather than flowing gas for example over the zinc containing carbonaceous material to be treated.

According to the present invention, the heat treatment can in particular comprise contacting the zinc containing carbonaceous material with a hot gas, such as a hot gas flow. The hot gas can form the gas atmosphere in which the zinc containing carbonaceous material is heat treated. The hot gas can accordingly be as described above for the gas atmosphere and the respective gas flow. In the practice of the present invention, the zinc containing carbonaceous material can in particular be injected into the hot gas, particularly hot gas flow. The hot gas flow can be obtained by for example by electrical heating, radiative heating, a plasma, or by combustion of a fuel and oxygen containing gas, or a combination of any of the foregoing. The hot gas can in particular be produced by combustion of a combustible fuel with an oxygen containing gas, e.g. by a burner and/or in a combustion chamber, for instance of a furnace reactor as described further below. The fuel can comprise for example gaseous or liquid hydrocarbons, preferably natural gas, a fuel oil, and/or hydrogen. Non-limiting examples for the oxygen-containing gas include e.g. air, oxygen-enriched air, oxygen-depleted air, or other mixtures comprising oxygen and one or more other gases. The fuel and/or the oxygen-containing gas can optionally be preheated, for example by using a heat exchanger, for example to a temperature between 50 and 900 °C, such as 100 to 900 °C, preferably 300 to 900 °C, and more preferably 450 to 850 °C. Fuel and oxygen-containing gas flow rates can be adjusted to give high temperatures and normally fall close to stoichiometric ratios. The oxygen-containing gas may be supplied in an amount that the k-value is in a range of 0.01 to 10, preferably 0.1 to 5, more preferably 0.5 to 2, and most preferably 0.7 to 1, wherein the k value is defined by the ratio of stoichiometric $O_2$ amount that is necessary for the complete stoichiometric combustion of the fuel to the actual supplied $O_2$ amount. The oxygen-containing gas may in particular be supplied in an amount yielding an excess of oxygen with respect to the amount of oxygen for a complete combustion of the fuel. The hot gas resulting from the combustion reaction, which may be contacted with the heat treating the zinc containing carbonaceous material, can have a temperature of 800 °C or more, such as 900 °C or more, or 1,000°C or more, such as 1,100°C or more, or 1,200°C or more, or 1,300°C or more, or 1,400°C or more, or 1,500°C or more, or 1,800°C or more. The hot gas may have a temperature of up to 3,500°C, such as 3,000°C or less, or 2,700°C or less, or 2,500°C or less, or 2,000°C or less, such as 1,900°C or less, or 1,800°C or less, or 1,700°C or less. The hot gas can have a temperature in a range between any of the recited values. The hot gas can for example have a temperature in a range from 800°C to 3,500°C, such as from 1,000°C to 3,000°C, preferably from 1,400°C to 2,700°C, more preferably from 1,800 to 2,500°C.

As mentioned above, by the heat treatment of the zinc containing carbonaceous material at least a part or all of the zinc contained by the carbonaceous material can be transferred into the gas atmosphere. The zinc is thus volatilized. The volatilized zinc can be present in the gas atmosphere e.g. as zinc atoms. The zinc atoms can react with oxygen to form zinc oxide that can be recovered from the gas phase. The heat treatment of the zinc containing carbonaceous material typically also comprises pyrolyzing at least a part of the carbonaceous material. This can promote transfer of the zinc component into the gas phase. Moreover, by the pyrolysis of e.g. organic compounds of the carbonaceous material, such as plastic and/or rubber material, a carbon-based inorganic material such as in particular carbon black can be formed. Alternatively or in addition, carbon black that was already contained in the heat treated zinc containing carbonaceous material as inorganic carbon-based material can be set free by the pyrolysis of the zinc containing carbonaceous material and recovered.

The process according to the present invention can optionally comprise quenching the hot gas to rapidly cool the hot gas atmosphere with the volatilized zinc and/or terminate the pyrolysis reaction and carbon black formation. Quenching can comprise injecting a quenching medium into the hot gas, such as into the hot gas flow. As quenching medium for instance water or an oil can be used.

The process according to the present invention further comprises depositing a zinc oxide material from the gas atmosphere. Accordingly, at least a part of the zinc contained by the zinc containing carbonaceous material can be recovered in the form of a zinc oxide material. As used herein, "zinc oxide material" means a material that is substantially made of zinc oxide. It can comprise components other than zinc oxide, however, only in minor amounts, such as up to in total 15 wt.% or less, or 10 wt.% or less, or 8 wt.% or less, or 7 wt.% or less, or 6 wt.% or less, or 5 wt.% or less, or 4 wt.% or less, or 3 wt.% or less, or 2 wt.% or less, or 1 wt.% or less. The recovered zinc oxide material can thus for example comprise at least 85 wt.% of zinc oxide, such as 90 wt.% or more, or 92 wt.% or more, or 93 wt.% or more, or 94 wt.% or more, or 95 wt.% or more, or 96 wt.% or more, or 97 wt.% or more, of zinc oxide, based on the total weight of the recovered zinc oxide material. The recovered zinc oxide material can for example comprise 99 wt.% or less, such as 98 wt.% or less, or 97 wt.% or less, or 96 wt.% or less, or 95 wt.% or less, of zinc oxide, based on the total weight of the recovered zinc oxide material. Depositing the zinc oxide material from the gas atmosphere can comprise providing conditions under which zinc oxide condenses from the gas phase. It can comprise contacting the gas atmosphere with a deposition surface or medium exhibiting a lower temperature than the gas atmosphere to deposit the recovered zinc oxide material from said gas phase on said deposition surface or in said deposition medium. The deposition surface can for example comprise a solid surface in the apparatus used for the heat treatment of the zinc containing carbonaceous material, in particular in a zone thereof, which is relatively cool compared to a zone where the zinc containing carbonaceous material is heat treated, or be provided outside of the heat treatment apparatus. The deposition medium can in particular comprise a liquid such as an aqueous medium, particular water, or a molten salt, which can take up zinc oxide. Such liquid can for example be provided in a zone of the apparatus used for the heat treatment of the zinc containing carbonaceous material, that is relatively cool compared to a zone where the zinc containing carbonaceous material is heat treated, or outside of the heat treatment apparatus. Contacting the gas atmosphere with the deposition surface or medium can comprise guiding the gas atmosphere, e.g. hot gas flow, over or towards the deposition surface or medium. The gas atmosphere, e.g. hot gas flow, can also be guided into or through the deposition medium for depositing the recovered zinc oxide material in the deposition medium. The deposition medium can also be injected into the gas atmosphere, such as hot gas flow. The above-mentioned quenching medium can thus for example also serve as deposition medium. The deposition surface or medium can be cooled. The deposition surface or medium should have a temperature that is below the sublimation temperature of zinc oxide. The deposition surface or medium can have a temperature of less than 1,000°C, such as 900°C or less, or 800°C or less, or 700°C or less, or 600°C or less, or 500°C or less, or 400°C or less, or 300°C or less, or 200°C or less, or 100°C or less. The deposition surface or medium can have a temperature of 50°C or more, such as 100°C or more, or 200°C or more, or 300°C or more, or 400°C or more, or 500°C or more, or 600°C or more. The deposition surface or medium can have a temperature in a range between any of the recited values, such as from 50°C to less than 1,000°C, or from 400°C to 900°C, or from 600°C to less than 1,000°C. In one example, for instance a deposition surface having a temperature below 1,000°C, such as from 400°C to less than 1,000°C, or from 600°C to 800°C, can be used for depositing the zinc oxide material from the gas atmosphere. In another example, water or an aqueous medium can be used as deposition medium to deposit the zinc oxide material from the gas atmosphere. The water or aqueous medium used as deposition medium can have a temperature up to its boiling point such as 100°C or less.

The gas atmosphere is typically transported over a distance between the heat treatment of the zinc containing carbonaceous material transferring at least a part of the zinc contained by the carbonaceous material into the gas atmosphere and the depositing of the recovered zinc oxide material from the gas atmosphere. In other words, the heat treatment of the zinc containing carbonaceous material and the deposition of the recovered zinc oxide material can be locally separated from each other, for example in different zones or sites of the apparatus used for heat treating the zinc containing carbonaceous material, or in the apparatus used for heat treating the zinc containing carbonaceous material and outside thereof, respectively. Transport of the gas atmosphere between the different process steps, zones or sites can be achieved by or comprise a gas flow, such as has been described above.

The recovered zinc oxide material deposited from the gas atmosphere may then be retrieved and/or collected, continuously or intermittently, for further use. For instance, the recovered zinc oxide material that has been deposited onto a deposition surface can be removed, continuously or intermittently, from the deposition surface. Any means known in the art to this end can be employed, such as mechanical scraping, blowing, or other techniques. In some cases, such as in vertical reactors, the deposited recovered zinc oxide material may also loosen from the deposition surface and fall by means of gravity to a collection site. Where the recovered zinc oxide material has been deposited in a deposition medium, the medium can continuously or intermittently be retrieved, e.g. from the apparatus for heat treating the zinc containing carbonaceous material and the recovered zinc oxide material be separated therefrom. The deposition medium from which the recovered zinc oxide material has been separated could then be re-used as deposition medium, enabling its use in a cycle.

The process according to the present invention can further comprise retrieving and/or collecting, continuously or intermittently, an inorganic carbon-based material obtainable by the heat treatment of the zinc containing carbonaceous material, as described above, preferably carbon black. This can comprise separating the inorganic carbon-based product material, such as carbon black, from the gas atmosphere, such as after quenching. The carbon-based product material, such as carbon black, can be separated from the gas atmosphere using any means known for this purpose in the art, such as a bag filter or cyclone separator.

As can be appreciated by one skilled in the art in view of the foregoing, a recovering of zinc oxide material from a zinc containing carbonaceous material according to the present invention can effectively be integrated or combined with a production of carbon black. The present invention thus also concerns a process for producing carbon black with recovery of zinc oxide material. The process comprises (a) supplying a zinc containing carbonaceous feedstock to a reactor, (b) pyrolyzing the zinc containing carbonaceous feedstock in a gas atmosphere in the reactor to form and/or recover carbon black and transfer at least a part of the zinc contained by the carbonaceous feedstock into the gas atmosphere, (c) separating the formed and/or recovered carbon black from the gas atmosphere, and (d) depositing a zinc oxide material from said gas atmosphere. Accordingly, the present invention also concerns use of a zinc containing carbonaceous material, particularly a zinc containing carbonaceous scrap and/or particulate material, as a feedstock for producing carbon black and/or for recovering zinc oxide material.

Any zinc containing carbonaceous material as described in detail above can be used as zinc containing carbonaceous feedstock supplied to the reactor in the process for producing carbon black according to the present invention. The term "feedstock" refers to the feedstock for the production of carbon black. In the process according to the present invention in particular a particulate zinc containing carbonaceous feedstock can be used for the production of carbon black. The feedstock can be characterized by its particle size distribution as described above with respect to the zinc containing carbonaceous material. For instance, at least 70 wt.-%, preferably at least 80 wt.-%, more preferably at least 90 wt.-%, most preferably at least 98 wt.-%, of the zinc oxide containing carbon-based feedstock can have a particle size of less than 2 mm, preferably less than 1 mm, more preferably less than 500 $\mu$m, and most preferably less than 250 $\mu$m, wherein the particle size is measured according to ASTM D 1511-12 (2017). It is preferred that the process for producing carbon black does not utilize a liquid or gaseous feedstock for the production of carbon black. The zinc containing carbonaceous feedstock used in the process for producing carbon black according to the present invention can in particular comprise a scrap material such as an organic scrap material like scrap plastic material and/or scrap rubber material, and/or an inorganic carbon-based scrap material such as used carbon black, as described above. The zinc containing carbonaceous feedstock may comprise a plastic granulate and/or rubber granulate, more preferably rubber granulate made for example from scrap tires and/or other waste rubber as described in detail above. The feedstock may comprise zinc in any form and amount as described above. The zinc can thus be present in the feedstock in elemental form, and/or in bound form, that is bound in zinc compounds and/or salts. Preferably, the zinc component of the feedstock comprises one or more zinc compound and/or zinc salt. The feedstock may comprise zinc in any amount as described above for the zinc containing carbonaceous material. The feedstock may for example comprise zinc in an amount from 0.1 wt.% to 10 wt.%, preferably from 0.3 wt.% to 5.0 wt.%, or from 0.5 to 4.0 wt.%, or from 1.0 wt.% to 3.0 wt.%, based on the total weight of the zinc containing carbonaceous feedstock. The amounts of zinc relate herein to the amount of zinc determined as elemental metal, irrespective of the form in which the zinc is actually present in the zinc containing carbonaceous feedstock.

Pyrolyzing the zinc containing carbonaceous feedstock in a gas atmosphere in the reactor to form and/or recover carbon black and transfer at least part of the zinc contained by the carbonaceous feedstock into the gas atmosphere, can be carried out by a heat treatment as described above in detail with respect to the heat treating of the zinc containing carbonaceous material. The heat treatment may in particular comprise heat treating the zinc containing carbonaceous material at any temperature described above in the context of heat treating the zinc containing carbonaceous material. The feedstock may thus be heat treated for example at a temperature of 1,000°C or more, such as at a temperature in a range from 1,000°C to 3,000°C, preferably 1,400°C to 2,700°C, more preferably 1,800°C to 2,500°C. The heat treatment of the feedstock can be carried out using any of the means and conditions described above in detail with respect to the heat treating of the zinc containing carbonaceous material. The heat treatment can in particular comprise contacting the zinc containing carbonaceous feedstock with a hot gas, such as a hot gas flow. The zinc containing carbonaceous feedstock, such as particulate feedstock, can in particular be injected into the hot gas, particularly hot gas flow. Means for injection of a particulate zinc containing carbonaceous feedstock into a hot gas stream are described further below. A hot gas or hot gas flow can be obtained by for example by electrical heating, plasma heating or combustion of a fuel and oxygen-containing gas as described above. The hot gas or hot gas flow can in particular be produced by combustion of a combustible fuel with an oxygen containing gas. The hot gas or hot gas flow can for example be provided by supplying fuel and oxygen-containing gas into a combustion chamber of the reactor, and combusting fuel in the combustion chamber to produce the hot gas or hot gas flow. The mass flow of the feedstock can be adjusted so that feedstock can be uniformly heated. For instance, the zinc containing carbonaceous feedstock, such as particulate zinc containing carbonaceous feedstock, may be injected into the reactor with a mass flow of 1 to 50 kg/h per 100 L of the reaction volume of the reactor, such as 5 to 40 kg/h per 100 L of the reaction volume of the reactor, or 7 to 30 kg/h per 100 L of the reaction volume of the reactor, and or 8 to 20 kg/h per 100 L of the reaction volume of the reactor.

The process for the production of carbon black can further comprise quenching the hot gas or hot gas flow after contacting with, e.g. injecting, the zinc containing carbonaceous feedstock and before separating the formed carbon black from the gas atmosphere. The quenching can be carried out as described above and can in particular comprise injecting a quenching medium such as water or an oil into the hot gas or hot gas flow.

Separating the formed and/or recovered carbon black from the gas atmosphere, and depositing a zinc oxide material from said gas atmosphere in the process for producing carbon black according to the present invention can be carried out in the same manner as described above for the process for recovering zinc oxide. Thus, the carbon black, can be separated from the gas atmosphere, such as after quenching, for example using a bag filter or cyclone separator. Depositing the zinc oxide material from the gas atmosphere can comprise providing conditions, e.g. in a zone or portion of the reactor, under which zinc oxide condenses from the gas phase. As described above this can comprise contacting the gas atmosphere, such as hot gas (flow), with a deposition surface or medium exhibiting a lower temperature than the gas atmosphere to deposit the recovered zinc oxide material from said gas atmosphere, such as hot gas (flow), on said deposition surface or in said deposition medium. The deposition surface can for example comprise a solid surface in the reactor, in particular in a zone thereof, which is relatively cool compared to a zone where the zinc containing carbonaceous feedstock is pyrolyzed. The deposition medium can in particular comprise a liquid such as an aqueous medium, particular water, or a molten salt, which can take up zinc oxide. Such liquid can for example be provided in a zone of the reactor that is relatively cool compared to a zone where the zinc containing carbonaceous feedstock is pyrolyzed. Contacting the gas atmosphere with the deposition surface or medium can comprise guiding the gas atmosphere, e.g. hot gas flow, over or towards the deposition surface or medium. The gas atmosphere, e.g. hot gas flow, can also be guided into or through the deposition medium for depositing the recovered zinc oxide material in the deposition medium. The deposition surface or medium can be cooled. The deposition surface or medium should have a temperature that is below the sublimation temperature of zinc oxide. As described above, the deposition surface or medium can for example have a temperature of less than 1,000°C, such as in a range from 400°C to 900°C, or from 600°C to 800°C, or about 100°C. The process for producing carbon black according to the present invention can comprise any other features as described above in the context of the process for recovering zinc oxide such as retrieving and/or collecting the deposited recovered zinc oxide material, continuously or intermittently, from a deposition surface or medium. The process allows advantageously to produce at the same time both, a carbon black product and a recovered zinc oxide material, as sellable valuable products from a single feedstock, which can in contrast to conventional liquid or gaseous feedstocks used to produce carbon black be provided in particulate form, and can in particular allow use of zinc containing carbonaceous scrap material such as rubber from used tires or other waste rubber or waste plastic materials.

The process for the production of carbon black with recovery of zinc oxide material according to the present invention can in particular be carried out in an entrained flow reactor, such as a furnace reactor or a vertical reactor for producing carbon black. These types of reactors are described for example in Industrial Carbon and Graphite Materials: Raw Materials, Production and Applications, 1st edition, 2021, Wiley VCH, vol. II, Chapter 10 "Carbon Black".

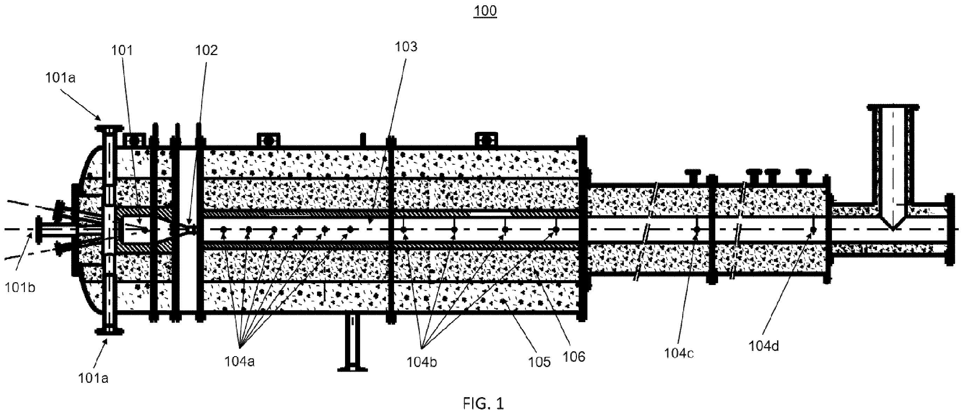

With reference to FIG. 1 a furnace reactor (100) is shown, which comprises in the following order from upstream to downstream (flow direction) a combustion chamber (101), a choke (102) and a tunnel (103). These components define a flow passage along the central longitudinal axis of the reactor for the hot gas flow, such as the hot combustion gases. Thus, the components are in fluid connection, particularly along the central longitudinal axis of the reactor. The reactor has an inner lining (106) as well as an outer lining (105). The combustion chamber (101) comprises means to inject a fuel (101b) and oxygen-containing gas (101a). In the figure, the oxygen-containing gas is injected into the combustion chamber (101) tangential or radial via oxygen containing gas injection means (101a) and the fuel is injected into the combustion chamber (101) axial via fuel injection means (101b). The oxygen-containing gas ($O_2$ containing gas or $O_2$ containing gas mixture) can be air, oxygen-enriched air, other oxygen containing gases and/or pure oxygen. Examples of suitable combustion fuels include e.g., natural gas, fuel oil or other gaseous or liquid hydrocarbons, preferably natural gas or a fuel oil, or $H_2$. In the combustion chamber (101) the fuel is combusted in the presence of the oxygen-containing gas. The oxygen-containing gas and/or fuel may optionally be preheated e.g. by contacting it with a heat exchanger prior to injection into the combustion chamber as also described above in the context of the process for recovering zinc oxide material. It is possible to adjust the temperature of the hot gas flow resulting from the combustion by such preheating. After the combustion, the temperature of the hot combustion gas may be at any temperature described above for causing pyrolysis of the carbonaceous feedstock and volatilizing zinc contained by the carbonaceous feedstock, such as 1,000°C or more, for example in a range from 1,000°C to 3,000°C, preferably from 1,400°C to 2,700°C, or from 1,800°C to 2,500°C. The temperature can be measured for example with a pyrometer, for instance directly at the location where the feedstock is injected into the hot gas flow.

The combustion chamber is preferably formed of an internal refractory lining covered by a gas tight e.g. metallic covering. The material forming the refractory, and outer lining can be those found conventionally in the art such as the castable refractory Kaocrete® 32-cm which is 70% alumina ($Al_2O_3$) and has a melting point of about 1870 °C. Additionally, a brick refractory can be relied upon such as RUBY SR (sold by Harrison-Walker Refractories, Pittsburg, PA.) brick refractory which is 84.5% alumina along with 9.8% chromic oxide ($Cr_2O_3$) and has a melting point of about 2050 °C. The shell or lining is preferably formed of carbon steel except for any piping in contact with hot process air. In those areas, the piping is formed of "316 Stainless Steel". The combustion chamber is preferably dimensioned as a cylinder.

As shown in the Figure, a constricting section (choke) (102) is provided downstream of the combustion chamber. The constriction section can have a tapering passageway and converge in an upstream to downstream direction. Preferably, these constriction sections are in the form of a frustoconical passageway. Further, the tunnel (103) is connected via the choke (102) with the combustion chamber so that the hot combustion gases obtained in the combustion chamber can flow into the tunnel. The tunnel (103) can be arranged along the central longitudinal axis of the reactor. The diameter of the tunnel can be greater than the diameter of the constriction section of the combustion chamber so that the hot combustion gas is able to expand. The expansion section is preferably dimensioned as a cylinder and in communication with the combustion chamber, preferably in communication with the constriction section (choke) of the combustion chamber.

The zinc containing carbonaceous feedstock can be injected into the flow of the hot combustion gas in the combustion chamber (101), in the choke (102), and/or in the tunnel (103) of the furnace reactor. The particulate carbon-containing feedstock is typically injected in the choke (constriction section). The zinc containing carbonaceous feedstock may be injected to the reactor via means to inject the feedstock. The means to inject the feedstock can comprise a plurality of injection nozzles or lances that are preferably arranged circumferentially with respect to the central longitudinal axis. The circumferential arrangement may promote uniform characteristics of the formed carbon black since the feedstock for the carbon black can be homogenously mixed with the hot gas flow. The zinc containing carbonaceous feedstock can be introduced through a plurality of means to inject the feedstock.

For instance, an axially extending feedstock lance and/or radially extending feedstock injectors with nozzles capable of producing a variety of cone shaped sprays (e.g., 15, 30, 45 and 60 degrees cone spray angles) can be used.

The means to inject the feedstock may be connected to a feeding and mixing device, such as a feeding and mixing device described further below. A feeding and mixing device may supply multiple feedstock inlets. However, it is also possible that more than one feeding and mixing device is used.

As shown in Figure 1, the tunnel (103) furthers comprises means for injecting a quenching medium into the flow passage along the central longitudinal axis of the reactor located at multiple positions (104a, 104b, 104c, 104d) along the central longitudinal axis of the reactor. Alternatively, the quenching means can comprise for example a quench boiler or a heat exchanger. By injection of the quench medium, usually water, the temperature of the hot gas flow can be rapidly reduced so that the reaction for forming the carbon black is terminated.

The distance between the feedstock injection means and the means for injecting a quenching medium (the first means for injection a quenching medium) can be between 150 to 80,000 mm, preferably 900 to 50,000 mm, more preferably 1,500 to 30,000 mm, and most preferably 2,500 to 20,000 mm.

The means for injecting a quenching medium can extend into the tunnel. For instance, a cooling fluid conduit or a plurality of radial cooling fluid conduits can be used. The quenching medium, such as a cooling fluid (e.g. water), can be sprayed within the tunnel to stop the carbon black formation reaction at the appropriate time and location.

Accordingly, the position of the used quenching means has an influence on the residence time of the feedstock, i.e. the time between the injection of the feedstock in the reactor and the time of the quench. The residence time of the feedstock provides a measure for the time in that the zinc containing carbonaceous feedstock can be volatilized and pyrolyzed. The residence time is increased if the quench position is adjusted further downstream the reactor. For instance, a quench at a position (104a) near the choke (102) results in a relatively short residence time and a quench at a position (104c) downstream the reactor results in a longer residence time. The quench position should be selected such that there is sufficient time for pyrolysis of the zinc containing carbonaceous feedstock to form and/or recover carbon black and for transferring zinc contained by the carbonaceous feedstock into the gas phase. The residence time may for instance be controlled to be in a range from 150 ms to 4 sec, preferably 200 ms to 3 sec, more preferably 250 ms to 2 sec, and most preferably 250 ms to 1 sec. The residence time may be selected in such a way that organic material in the carbonaceous feedstock is completely pyrolyzed and/or the zinc component contained by the carbonaceous feedstock is completely volatilized.

The formed carbon black can then be separated, after quenching, from the gas stream, for instance by means of a bag filter at the end of the tunnel. Further, zinc oxide material can be deposited from the gas atmosphere, for example by depositing it on a deposition surface or medium that has a suitably low temperature, as described herein. The deposition surface can for instance be provided by a surface that is cooled such as of the above-mentioned quenching means, or that is located in a relatively cool zone of the reactor, e.g. part of the tunnel, or a surface of a dedicated means for deposition of the recovered zinc oxide material provided in or coupled to the reactor, such as a condenser or separator. Alternatively or in addition, a deposition medium, such as the aforementioned quench medium could be used for depositing the zinc oxide material from the gas atmosphere. The conditions can accordingly be controlled such that the deposition medium can be present as a liquid in a portion or zone of the reactor or means coupled to the reactor for depositing the zinc oxide material from the gas atmosphere.

In the above-described processes according to the present invention for recovering zinc oxide material and/or producing carbon black preferably a particulate zinc containing carbonaceous material or feedstock is used.

It is particularly preferred that the particulate zinc containing carbonaceous material or feedstock is deagglomerated before heat treatment of the material or injection into the reactor. It is believed that the evaporation can be promoted by using deagglomerated particles.

Accordingly, the processes according to the present invention may further comprise deagglomerating the particulate zinc containing carbonaceous material or feedstock. The deagglomerated particulate zinc containing carbonaceous material or feedstock can then be heat treated or injected in the reactor to form carbon black.

The deagglomeration can be achieved by (i) accelerating the particulate zinc containing carbonaceous material or feedstock, and/or (ii) applying shear forces, preferably using an extruder. The deagglomeration can be carried out in (i) a feeding and mixing device, preferably comprising a nozzle, and/or (ii) an extruder.

Accelerating of the particulate zinc containing carbonaceous material or feedstock can result in the deagglomeration of the particles. For example, a carrier gas, such as $N_2$ or air, can be accelerated and the particles are injected into the accelerated carrier gas. In other words, the deagglomeration can be carried out by subjecting the particulate zinc containing carbonaceous material or feedstock into a carrier gas jet.

The deagglomeration can be carried out in (i) a feeding and mixing device comprising a Laval nozzle.

The carrier gas and/or the particulate zinc containing carbonaceous material or feedstock is preferably accelerated to over 1 Ma, preferably 1.01 Ma to 1.7 Ma, more preferably 1.1 Ma to 1.6 Ma, and most preferably 1.2 Ma to 1.5 Ma. A Mach number of over 1 can be achieved with a jet nozzle such as a Laval nozzle. Ma is the Mach number. However, flow velocities from 0.01 Ma to 3 Ma, preferably 0.1 Ma to 2 Ma, more preferably 0.2 to 1.8 Ma, and most preferably 0.3 to less than 1 Ma, are also desirable.

A deagglomeration can also be achieved by an impact of the accelerated particulate zinc containing carbonaceous material or feedstock with an object, such as two particles of the particulate carbon-containing feedstock, or by the impact of particles of the particulate zinc containing carbonaceous material or feedstock and a surface such as the inner surface of a deagglomeration conduit.

The deagglomerated particulate carbon-containing feedstock (or the carrier gas comprising the deagglomerated particulate carbon-containing feedstock) can be injected into the reactor or heat treatment apparatus at a pressure from 0.5 bar to 2 bar, preferably 0.7 bar to 1.5 bar, more preferably 0.8 to 1.3 bar, and most preferably 0.8 to 1.2 bar.

The deagglomerated particulate zinc containing carbonaceous material or feedstock can be comprised in a carrier gas and the carrier gas can optionally further comprise $H_2O$ and/or additives. $H_2O$ can prevent the re-agglomeration of the particles in the carrier gas. Thus, the deagglomerated particulate carbon-containing feedstock should be comprised in a carrier gas and the carrier gas can further comprise $H_2O$ in an amount of 1 to 10 vol.-%, preferably 2 to 8 vol.-%, more preferably 3 to 7 vol.-%, based on the total volume of the carrier gas comprising the deagglomerated particulate zinc containing carbonaceous material or feedstock

The deagglomeration can be carried out in a feeding and mixing device for particles into a reactor comprising: (i) a carrier gas passage extending through said feeding and mixing device, (ii) at least one carrier gas inlet, which is in fluid communication with said carrier gas passage, (iii) at least one particle inlet, (iv) a mixing chamber which is in fluid communication with said at least one particle inlet and with said carrier gas inlet, (v) a deagglomeration conduit which is in fluid communication with said mixing chamber, (vi) at least one outlet for said carrier gas entraining particles which have been fed into said mixing chamber, wherein said at least one outlet for is in fluid communication with said deagglomeration conduit, and (vii) means for accelerating and injecting a stream of carrier gas into said mixing chamber.

Said gas passage can extend along a longitudinal axis through said feeding and mixing device and preferably said at least one inlet, said mixing chamber, said deagglomeration conduit and said outlet are aligned with said longitudinal axis.

Said particle inlet may be configured to feed particles into said mixing chamber at an angle relative to a carrier gas jet discharged into said mixing chamber, preferably perpendicularly to the carrier gas jet. However, the angle is not particularly limited for the present invention.

Said means for accelerating and injecting the stream of carrier gas may include at least one jet nozzle (nozzle). The jet nozzle is configurated to accelerate the stream of carrier gas.

Said jet nozzle can be a Laval-nozzle. Such a Laval nozzle (or nozzle) may comprise (in the following order) a convergent section, a throat and a divergent section. Typically, the convergent section reduces the diameter of the nozzle so that the gas flow is accelerated. The divergent section increases the diameter in this section. However, the diameter increased by the divergent section is still lower than the diameter before the convergent section. Accordingly, a nozzle comprising in the following order a convergent section, a throat and a divergent section, the gas flow is accelerated.

It is possible that the means for accelerating and injecting the carrier gas (or nozzle) is positioned in such a way that the means for accelerating and injecting the carrier gas protrudes into the cavity of the inlet funnel of the deagglomeration conduit.

Said deagglomeration conduit may comprise a conduit having a constant inner diameter. In said conduit having a constant inner diameter the particles collide with each other or the particles collide with the wall of the conduit having a constant inner diameter to further deagglomerate. Said deagglomeration conduit can be configured as a diffuser.

Said deagglomeration conduit can comprise from downstream to upstream an inlet funnel, a conduit having a constant inner diameter and a diffuser nozzle diverging in said flow direction. The nozzle for diverging should continuously increase the inner diameter of the deagglomeration conduit. Accordingly, the carrier gas flow is not interrupted and turbulences are avoided. The angle of said diffuser nozzle can be from 1 to 30°, preferably 2 to 20°, more preferably 3 to 15°, and most preferably 4 to 8°. The angle of said inlet funnel can be from 20 to 80°, preferably 30 to 75°, more preferably 40 to 70°, and most preferably 50 to 65°.

The longitudinal axis of said deagglomeration conduit could be coaxial to the longitudinal axis of the feeding and mixing device. The coaxial arrangement improves the overall acceleration as well as deagglomeration.

The inner diameter of the conduit having a constant inner diameter should be higher than the maximum inner diameter of the outlet of the means for accelerating and injecting a stream of the carrier gas.

The means for accelerating and injecting a stream of carrier gas, the mixing chamber and the deagglomeration conduit should be configured so that the carrier gas jet is discharged in the deagglomeration conduit.

The feeding and mixing device can further comprise at least one hopper upstream said at least one particle inlet.

At least one screw conveyor, such as a screw conveyor, may be present upstream of said at least one particle inlet. The screw conveyor may be configured to provide a constant amount of particles (particulate carbon-containing feedstock) into the mixing chamber. Accordingly, the supply of the particles can be controlled by the screw conveyor.

The feeding and mixing device often further comprise a pressure tank for the particles, wherein the pressure tank is in fluid communication with said at least one particle inlet and optionally with said at least one screw conveyor. Preferably two pressure tanks are present, wherein a first pressure tank is connected to a second pressure tank. Both pressure tanks can be connected via a valve.

A feeding and mixing device as described herein can accordingly be used in the processes according to the present invention to provide a (deagglomerated) particulate zinc containing carbonaceous material or feedstock to a heat treatment apparatus or reactor. The feeding and mixing device can be in fluid communication with said heat treatment apparatus or reactor. For instance, the feeding and mixing device may be connected to a plurality of inlets of said reactor, such as injection lances.

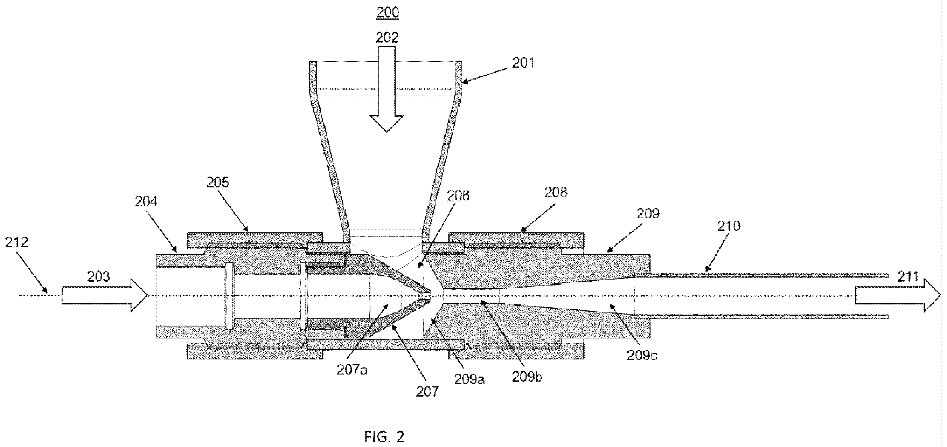

Referring to FIG. 2, an exemplary feeding and mixing device (200) that can be used according to the present invention is shown. The feeding and mixing device comprises a carrier gas inlet (204), a particle inlet (201), means for accelerating and injecting a stream of carrier gas (207), a deagglomeration conduit (209), a mixing chamber (206) and an outlet for said carrier gas entraining particles (210). The carrier gas passage (212) is also indicated in FIG. 2. The carrier gas passage (212) extends along a longitudinal axis through said feeding and mixing device. The carrier gas (203) enters the feeding and mixing device (200) through the carrier gas inlet (204) and is accelerated in the means for accelerating and injecting a stream of carrier gas (207). In FIG. 2, the means for accelerating and injecting a stream of carrier gas (207) is configured as a Laval-nozzle. The Laval-nozzle comprises a convergent area (207a) in the flow direction. The resulting carrier gas jet is injected into the mixing chamber (206). The particles such as the particulate carbon-containing feedstock (202) are perpendicularly injected into the mixing chamber (206). Accordingly, the particles will be entrained in the accelerated carrier gas. The abrupt acceleration of the particles results in a deagglomeration of the particles. The accelerated carrier gas comprising the particles are further injected into the deagglomeration conduit (209). In the deagglomeration conduit (209) the particles collide with each other or the inner wall or inner surface of the deagglomeration conduit (209) thereby a further deagglomeration is achieved. It is desired that the means for accelerating and injecting a stream of carrier gas (207) is configured in such a way that the carrier gas jet is directly injected into the deagglomeration conduit (209). Accordingly, a loss of the velocity can be minimized. The deagglomeration conduit (209) normally comprises from downstream to upstream (in the flow direction) an inlet funnel (209a), a conduit having a constant inner diameter (209b) and a diffuser nozzle diverging in said flow direction (209c). The inlet funnel (209a) further allows an optimal flow behaviour into the conduit having a constant inner diameter (209b). The diffuser nozzle diverging in said flow direction (209c) is also beneficial for the flow behaviour. The outlet can be connected to the means for injecting the feedstock into a reactor e.g. according to FIG.1. The feeding and mixing device (200) may comprise a screw conveyor that is connected with the particle inlet (201). The screw conveyor can provide a suitable amount or weight of particles into the mixing chamber (206). Furthermore, the feeding and mixing device (200) can be operated under pressure such as 1.5 bar or 2 bar. A pressure tank for the particles (e.g. particulate carbon containing feedstock) can be installed. Such a pressure tank is in fluid connection with the particle inlet (201) and is preferably connected with the feeding and mixing device (200) via a valve. Preferably two pressure tanks are present, wherein a first pressure tank connected to a second pressure tank. Both pressure tanks can be connected via a valve.

Generally, the processes according to the present invention as described above can be conducted as a continuous process, as a semi-batch or as a batch process. In case of a continuous process, zinc containing carbonaceous material can for instance be continuously fed to a heat treatment apparatus, such as a reactor for producing carbon black, where it is heat treated or pyrolyzed according to a process described herein, and recovered zinc oxide material and/or carbon black obtained thereby be continuously withdrawn from the heat treatment apparatus or reactor. In case of a batch or semi-batch operation, a batch of zinc containing carbonaceous material can to be loaded to a heat treatment apparatus, such as a reactor for producing carbon black, where it is heat treated or pyrolyzed according to a process described herein for a desired time under controlled conditions, to produce recovered zinc oxide material and/or carbon black. After the desired time, the production process can be stopped and recovered zinc oxide material and/or carbon black obtained thereby be retrieved from the heat treatment apparatus, e.g. reactor.

The products obtainable by the processes as described above, a recovered zinc oxide material and carbon black, if applicable, can be used as such or optionally be subjected to further processing before use. The recovered zinc oxide material or carbon black obtained by a process according to the present invention can thus be subjected to any further processing that may be used in the art for processing such solid materials, such as for example, without being limited thereto, drying, milling, classifying, pelletizing, forming, purification or chemical modification. It has though been found that that the recovered zinc oxide material or carbon black obtained by a process according to the present invention does not need to be purified, but can be used without purification at least in some applications such as in vulcanizable rubber compositions.

The recovered zinc oxide material obtainable by a process for recovering zinc oxide material or process for producing carbon black with recovery of zinc oxide material as described herein can be characterized by a relatively high content of sulphur and/or carbon. Thus, the recovered zinc oxide material can have a carbon content of 0.5 wt.% or more, such as 0.6 wt.% or more, or 0.7 wt.% or more, or 0.8 wt.% or more, or 0.9 wt.% or more, or 1.0 wt.% or more, or 1.2 wt.% or more, or 1.4 wt.% or more, based on the total mass of the zinc oxide material. The recovered zinc oxide material can have a carbon content of 3.0 wt.% or less, such as 2.5 wt.% or less, or 2.0 wt.% or less, or 1.5 wt.% or less, based on the total mass of the zinc oxide material. The recovered zinc oxide material can have a carbon content in a range between any of the recited values, such as in a range from 0.5 to 3.0 wt.%, or from 0.7 to 2.0 wt.%, or from 0.8 wt.% to 1.5 wt.%, based on the total mass of the zinc oxide material. Alternatively or in addition, the recovered zinc oxide material can have a sulphur content of 0.5 wt.% or more, such as 0.6 wt.% or more, or 0.7 wt.% or more, or 0.8 wt.% or more, based on the total mass of the zinc oxide material. The recovered zinc oxide material can have a sulphur content of 2.0 wt.% or less, such as 1.8 wt.% or less, or 1.6 wt.% or less, or 1.4 wt.% or less, or 1.2 wt.% or less, based on the total mass of the zinc oxide material. The recovered zinc oxide material can have a sulphur content in a range between any of the recited values, such as in a range from 0.5 to 2.0 wt.%, or from 0.7 to 1.6 wt.%, or from 0.8 wt.% to 1.2 wt.%, based on the total mass of the zinc oxide material. The amounts of carbon and sulphur as recited herein relate to the amounts of carbon and sulphur, respectively, determined as elemental carbon or elemental sulphur, irrespective of the form in which the carbon or sulphur is actually present in the zinc oxide material. The carbon content and sulphur content can be determined as described in the examples. Such relatively high content of sulphur and/or carbon might be a reason for some of the observed unexpected properties of the recovered zinc oxide material of the present invention such as an enhanced activity in promoting the vulcanization reactions.

The recovered zinc oxide material of the present invention can be used in any application, where zinc oxide is commonly used in the art, for example as vulcanization activator, pigment, UV light absorber, bacteriostat, corrosion inhibitor, catalyst, and/or for the production of plastic compositions, rubber compositions, glass, ceramics, cement, paints, sunscreens, medical, pharmaceutical or cosmetic products, food supplements, cements, pigments, or zinc compounds or salts, such as zinc soaps.

If desired, the recovered zinc oxide of the present invention can thus also be converted by a chemical reaction to zinc salts or compounds different from zinc oxide. To this end, the recovered zinc oxide material according to the present invention can be reacted with one or more reactive agents to form a zinc salt or compound different from zinc oxide, such as a zinc soap, like fatty acid salts of zinc, such as for example zinc stearate or zinc palmitate. The manufacture of zinc soaps is for example described in US 4316852 A and the prior art discussed therein.

The obtained carbon black, which can be produced according to the present invention can comprise newly formed carbon black, recovered carbon black and a mixture or combination thereof. Recovered carbon black can generally be obtained if the zinc containing carbonaceous feedstock comprises carbon black, such as in case of a rubber or plastic material comprising carbon black filler. New carbon black may in particular be formed by pyrolysis from organic compounds, such as rubber or plastic material, in the process of the present invention.

The carbon blacks obtainable according to the present invention, can be used in any application, where carbon blacks are commonly used. For instance, the carbon blacks obtainable according to the present invention can be used as pigment, conductive agent or reinforcing filler, for example for the manufacture of rubber or plastic compositions and articles, coatings, inks such as printing inks or inkjet inks, toners, lacquers, coatings, electrodes or energy storage devices.

The recovered zinc oxide material and carbon black obtainable according to the present invention can exhibit properties comparable or partly even better compared to conventional zinc oxide or carbon black rendering them interesting in all fields of use where zinc oxide or carbon black is commonly employed, e.g. as a cost-effective substitute to conventional zinc oxide or carbon black materials. In particular, the recovered zinc oxide material and/or carbon black obtainable according to the present invention can advantageously be used in vulcanizable rubber compositions. For instance, the recovered zinc oxide material has surprisingly been found to be very effective in promoting the vulcanization reaction and can even have a higher activity than virgin zinc oxide material conventionally employed as activator for the vulcanization of rubber compounds.

The recovered zinc oxide material, zinc salt or compound different from zinc oxide obtained therefrom and/or carbon black made in accordance with the present invention can accordingly be formulated with further ingredients to form a composition such as a plastic or rubber composition, a glass or ceramic composition, a paint, ink or coating composition or electrode composition. The term "composition" as used herein refers to a material composed of multiple constituent chemical species or components. The present disclosure thus also relates to compositions comprising one or more of the recovered zinc oxide material, zinc salt or compound different from zinc oxide obtained therefrom and/or carbon black made in accordance with the present invention. In particular, a vulcanizable rubber composition is provided, which comprises a vulcanizable rubber component and one or more of the recovered zinc oxide material, a zinc salt or compound formed therefrom and/or carbon black made in accordance with the present invention.

The present disclosure thus relates also to the use of a recovered zinc oxide material and/or a zinc salt or compound formed therefrom as described herein in the formulation of vulcanizable rubber compositions, for example as partial or full substitute to virgin zinc oxide or virgin zinc salts or compounds. Use of a carbon black made according to the present invention in the formulation of vulcanizable rubber compositions is likewise foreseen.

The term "vulcanizable rubber composition" refers to a composition of a rubber component optionally with various further ingredients conventionally used in the art of rubber compounding that can be cured by vulcanization under formation of a vulcanizate. The terms "curable" and "vulcanizable" are used interchangeably throughout this description unless otherwise stated and refer to a chemical reaction linking polymer chains to each other by means of a cross-linker or vulcanizing agent. The curing reaction can be induced by any means known in the art such as by light, moisture, heat and/or addition of a crosslinker.

Rubbers that can be used according to the present invention include those containing olefinic unsaturation, i.e. diene-based rubber materials, as well as non-diene-based rubber materials. The term "diene-based rubber materials" is intended to include both natural and synthetic rubbers or mixtures thereof. The vulcanizable rubber composition according to the present invention can accordingly comprise natural and/or synthetic rubber.

Natural rubber can be used in its raw form and in various processed forms conventionally known in the art of rubber processing. Natural rubber can for example be obtained from rubber trees (Helvea brasiliensis), guayule, and dandelion. The vulcanizable rubber composition can comprise 5 phr or more of natural rubber, such as 10 phr or more, or 15 phr or more, or 20 phr or more, or 30 phr or more, or 40 phr or more, or 50 phr or more, or 60 phr or more, or 70 phr or more, or 80 phr or more. As used herein, the term "phr" refers to parts by weight of the recited respective material per 100 parts by weight of the rubber component of the composition. The vulcanizable rubber composition can comprise 100 phr or less of natural rubber, such as 95 phr or less, or 90 phr or less, or 85 phr or less, or 80 phr or less, or 75 phr, or less 70 phr or less, or 65 phr or less, or 60 phr or less. The vulcanizable rubber composition can comprise natural rubber in a range between any of the recited lower and upper limits. For example, the vulcanizable rubber composition can comprise natural rubber in a range of 5 to 95 phr, such as in a range of 10 to 90 phr, or in a range of 20 to 80 phr, or in a range of 30 to 70 phr, or in a range of 40 to 60 phr. The rubber component can also consist of natural rubber, i.e. contain 100 phr natural rubber.

Non-limiting examples of synthetic rubber include styrene-butadiene rubber such as emulsion-styrene-butadiene rubber (ESBR) and solution-styrene-butadiene rubber (SSBR), polybutadiene, polyisoprene, ethylene-propylene-diene rubber (EPDM), ethylene-propylene rubber (EPM), butyl rubber, halogenated butyl rubber, chlorinated polyethylene, chlorosulfonated polyethylene, acrylonitrile-butadiene rubber, hydrogenated acrylonitrile-butadiene rubber, polychloroprene, acrylate rubber, ethylene-vinylacetate rubber, ethylene-acrylic rubber, epichlorohydrin rubber, silicone rubber, fluorosilicone rubber, fluorocarbon rubber or mixtures or combinations of any of the foregoing.

The rubber component may also include functionalized rubbers and rubbers coupled to silicon or tin. For example, rubbers can be functionalized with functional groups like amine, alkoxy, silyl, thiols, thioesters, thioether, sulfanyl, mercapto, sulfide or combinations thereof. The one or more functionalities can be primary, secondary or tertiary and can be located at one or both chain ends (e.g. $\alpha,\omega$-functionalization), pendant from the polymer backbone and/or provided within the chain of the polymer backbone. The rubber according to the invention can also be partially cross-linked. Thus, prior to use in the composition of the present invention, part of the polymer chains of the rubber material can be cross-linked either by means of a coupling agent or without. The vulcanizable rubber composition can comprise 5 phr or more of synthetic rubber, such as 10 phr or more, or 15 phr or more, or 20 phr or more, or 30 phr or more, or 40 phr or more, or 50 phr or more, or 60 phr or more, or 70 phr or more, or 80 phr or more. As used herein, the term "phr" refers to parts by weight of the recited respective material per 100 parts by weight of the rubber component of the composition. The vulcanizable rubber composition can comprise 100 phr or less of synthetic rubber, such as 95 phr or less, or 90 phr or less, or 85 phr or less, or 80 phr or less, or 75 phr, or less 70 phr or less, or 65 phr or less, or 60 phr or less. The vulcanizable rubber composition can comprise synthetic rubber in a range between any of the recited lower and upper limits. For example, the vulcanizable rubber composition can comprise synthetic rubber in a range of 5 to 95 phr, such as in a range of 10 to 90 phr, or in a range of 20 to 80 phr, or in a range of 30 to 70 phr, or in a range of 40 to 60 phr. The rubber component can also consist of synthetic rubber, i.e. contain 100 phr synthetic rubber.

The vulcanizable rubber composition can preferably comprise a mixture of natural rubber and synthetic rubber. The vulcanizable rubber composition can comprise from 5 to 100 phr of natural rubber and from 5 to 100 phr of synthetic rubber, such as from 10 to 90 phr of natural rubber and from 10 to 90 phr of synthetic rubber, or from 20 to 80 phr of natural rubber and from 20 to 80 phr of synthetic rubber, or from 30 to 70 phr of natural rubber and from 30 to 70 phr of synthetic rubber, or from 40 to 60 phr of natural rubber and from 40 to 60 phr of synthetic rubber, or from 40 to 100 phr of natural rubber and from 5 to 60 phr of synthetic rubber, or from 50 to 95 phr of natural rubber and from 5 to 50 phr of synthetic rubber, or from 60 to 90 phr of natural rubber and from 10 to 50 phr of synthetic rubber, or from 5 to 40 phr of natural rubber and from 60 to 100 phr of synthetic rubber, or from 10 to 20 of natural rubber and from 80 to 90 phr. Herein, the total amount natural rubber and synthetic rubber sums up in each case up to 100 phr. For example, the vulcanizable rubber composition may comprise 50 phr of natural rubber and 50 phr of synthetic rubber or the vulcanizable rubber composition may comprise 5 phr of natural rubber and 95 phr of synthetic rubber.

The recovered zinc oxide material according to the present invention and/or a zinc salt or compound formed therefrom may be used in the vulcanizable rubber composition in an amount of 0.1 to 20 phr, preferably 0.5 to 10 phr, more preferably 1 to 6 phr. The recovered zinc oxide material according to the present invention and/or a zinc salt or compound formed therefrom may in particular serve as activator(s) for the vulcanization process.

The vulcanizable rubber composition can comprise 3 to 200 phr, such as 5 to 190 phr, or 20 to 130 phr, or 30 to 100 phr of filler. The filler can comprise one or more filler materials such as for example carbon black, silica, organo-silica, carbon nanotubes, carbon fibers, graphite, metal fibers or the like. The filler may comprise or consist of the carbon black obtained according to the present invention. Also other conventional carbon blacks can be used, which can be exemplified by the ASTM-grade carbon blacks selected from the 100er to the 900er series as classified according to ASTM D1765.

The vulcanizable rubber composition typically further comprises at least one vulcanizing agent able to induce cure of the rubber. Possible vulcanizing agents include any vulcanizing agents known from the art such as in particular sulfur and sulfur donors. As exemplary sulfur donors may be mentioned dithioalkanes, dicaprolactamsulfides, polymeric polysulfides, sulfur olefin adducts, thiurams and sulfonamides with at least two sulfur atoms in the sulfur bridges. Preferably elemental sulfur is used as vulcanizing agent in the rubber compositions of the present invention. The vulcanizing agent is typically used in an amount ranging from 0.5 to 10 phr, such as from 1 to 5 phr, in the vulcanizable rubber composition.

The vulcanizable rubber composition may further comprise one or more additives as is common in the art of rubber formulations. The one or more additives can for example be selected from curing aids such as primary and secondary vulcanization accelerators, activators and pre-vulcanization inhibitors, processing additives such as oils, waxes, resins, plasticizers, softeners, rheology modifiers, pigments, peptizing agents, coupling agents, surfactants, biocides and anti-degradants, such as heat or light stabilizers, anti-oxidants and anti-ozonates. Useful as primary and secondary vulcanization accelerators are for example guanidines, dicarbamates, dithiocarbamates, thiurams, thioureas, 2-mercaptobenzothiazole, benzothiazole sulfonamides, aldehydeamines, amines, disulfides, thiazoles, xanthates, and sulfenamides. These additives, if used in the vulcanizable rubber composition, will be used in an effective amount for the respective purpose. Primary accelerators can for example be used in the composition in a total amount ranging from 0.05 to 4 phr. Secondary accelerators are typically employed in smaller amounts than primary accelerators and can be present in the composition in an amount ranging from 0.05 to 3 phr.

The vulcanizable rubber composition can be obtained and processed by common elastomer processing technology. The composition can for example be obtained by combining the recovered zinc oxide material, zinc salt or compound different from zinc oxide obtained therefrom and/or carbon black made in accordance with the present invention and any other ingredients as described above, if used, with the rubber component and mixing the same, e.g. to disperse the recovered zinc oxide material, zinc salt or compound different from zinc oxide obtained therefrom and/or carbon black and any further ingredients, if used, in the rubber component. Dispersion can be achieved by any means known in the art such as by mixing, stirring, milling, kneading, ultrasound, a dissolver, a shaker mixer, rotor-stator dispersing assemblies, or high-pressure homogenizers or a combination thereof. For example, a lab mixer with intermeshing rotor geometry can be used. The dispersing can for example be conducted until the recovered zinc oxide material, zinc salt or compound different from zinc oxide obtained therefrom and/or carbon black is homogeneously dispersed in the rubber component, resulting in a dispersion index of larger than 95% or more, preferably 97% or more, or more than 99% according to the classification pursuant to ASTM D2663-88, test method B.

Preparation of the composition according to the present invention may for example be conducted in a multiple step process: At first, the recovered zinc oxide material, zinc salt or compound different from zinc oxide obtained therefrom and/or filler such as carbon black made in accordance with the present invention and optionally non-curative additives, if used, may be added to the rubber component concomitantly or successively. These components may then be mixed, typically at a temperature in a range from 40°C to 160°C for a total mixing time of less than 10 min, such as in a range from 2 to 8 min. Subsequently, the obtained mixture may be blended with one or more curative additives for less than 5 min, typically less than 3 min, preferably for about 2.5 min, at a temperature of less than 115°C.

The vulcanizable rubber composition can be cured, i.e. vulcanized. Curing can be carried out using conventional curing means and conditions known as such in the art of rubber processing. For example, curing of the vulcanizable rubber composition according to the invention can be carried out by subjecting the vulcanizable rubber composition to thermal curing conditions, e.g. to a temperature of 120-200°C for a time of 5 minutes to 3 hours. Curing can for instance be carried out in a curing press for example at a temperature of 140-180°C for 5 to 60 minutes at a pressure between 100 and 150 bar.

From the vulcanizable rubber compositions various articles of manufacture can be produced. The article can for example be a tire, a tire component such as a tire tread, a cable sheath, a tube, a drive belt, a conveyor belt, a roll covering, a shoe sole, a sealing member, a profile, a damping element or any other rubber goods. A tire according to the present invention may comprise a tread, carcass, sidewall, inner liner, apex, shoulder, hump strip, chafer and/or a bead filler, wherein at least one of the foregoing is made of or comprises a composition according to the invention. Such tires include for example, without being limited thereto, truck tires, passenger tires, off-road tires, aircraft tires, agricultural tires, and earth-mover tires. The manufacture of articles from the vulcanizable rubber compositions described herein can be achieved using existing technology and is therefore not further described herein. The rubber articles can after their end of life advantageously be used to provide a material or feedstock, e.g. rubber granulate, that can be used in the processes described herein to recover zinc oxide and optionally form and/or recover carbon black therefrom.

The invention will now be further illustrated by the following Examples. It is to be understood that the Examples are included for the sake of illustration, and are not to be construed as limiting to the present invention. In particular, the sought scope of protection shall not be limited by the specific Examples disclosed hereinafter, but is rather to be given the full breadth of the appended claims including any equivalents thereof.

EXAMPLES

All parts and percentages mentioned herein are based on weight, unless indicated otherwise.

*Zinc containing carbonaceous scrap material*

Rubber granulate, commercially available from ESTATO Umweltservice GmbH (ESTATO), Germany as Gummigranulat 0.0 - 0.5 mm (Article Nr. 005GUM), was used as zinc containing carbonaceous material for the recovery of zinc oxide and the production of carbon black as described herein below. The rubber granulate is a scrap material derived from end-of-life tires and comprises synthetic rubber (SBR) and natural rubber (NR). The particle size distribution of the rubber granulate, measured according to ASTM D 1511-12 (2017), is shown in Table 1 below. The weight average particle diameter (Dw50) measured according to ASTM D 1511-12 (2017), is about 400 $\mu$m.

Table 1:

| | |
|---|---|
| Particle fraction < 0.125 mm | 2.0 wt.-% |
| Particle fraction 0.125 - 0.25 mm | 9.6 wt.-% |
| Particle fraction 0.2 5 - 0.50 mm | 34.5 wt.-% |
| Particle fraction 0.50 - 1.0 mm | 45.1 wt.-% |
| Particle fraction 1.0 - 2.0 mm | 8.8 wt.-% |
| Particle fraction > 2.0 mm | 0.0 wt.-% |

The chemical composition of the used rubber granulate was analyzed as follows. The carbon mass fraction, hydrogen fraction mass, nitrogen mass fraction, oxygen mass fraction, and sulfur mass fraction were measured using an elemental analyzer with thermal conductivity and infrared detector (vario EL cube CHNS from Elementar), as also described further below with respect to analysis of the zinc oxide material. Furthermore, the zinc content was measured by inductively coupled plasma - optical emission spectrometry (ICP OES). A pressure-assisted microwave digestion was carried out before for instance by using a micro-wave and nitric acid. The measurements were carried out according to ASTM D8371-20.Table 2 summarizes properties of the used rubber granulate in terms of its determined chemical composition. Zinc is present, presumably in the form of zinc salts and/or compounds, originating from zinc containing ingredients in the rubber composition used to prepare the tires.

Table 2:

| Property | Value |
|---|---|
| Carbon mass fraction | 77.99 wt.% |
| Hydrogen mass fraction | 7.13 wt.% |
| Nitrogen mass fraction | 0.41 wt.% |

(continued)

| Property | Value |
|---|---|
| Sulphur mass fraction | 1.73 wt.% |
| Oxygen mass fraction | 2.49 wt.% |
| Zinc mass fraction | 1.7 wt.% |
| Other | balance |

*Recovery of zinc oxide material (in example of carbon black production)*

The above-described rubber granulate was used as a feedstock material for the production of carbon black in a small-scale furnace reactor as shown in FIG. 1.

The furnace reactor (100) comprises a combustion chamber (101), a choke (102) and a tunnel (103) arranged along a longitudinal main axis. In the combustion chamber (101) fuel is combusted in the presence of the oxygen-containing gas. The combustion chamber accordingly comprises means to inject a fuel (101b) and oxygen-containing gas (101a). Natural gas was used as fuel and air as oxygen-containing gas, which was preheated prior to injection into the combustion chamber by contacting it with a heat exchanger. The temperature in the combustion chamber, i.e. the temperature of the hot combustion gases, as measurable with a pyrometer, was controlled by the relative amounts of the gas flows of fuel and oxygen (k value) and the temperature of the combustion air upstream the combustion chamber. The combustion chamber narrows conically towards the choke as the narrowest section. In the used small-scale furnace reactor, the choke reduces the diameter to 45 mm. The rubber granulate was injected into the hot combustion gas in the furnace reactor in the choke via a feeding and mixing device having a nozzle as shown in FIG. 2, and described in the general specification above, using nitrogen as a carrier gas. The hot combustion gas heats the particulate carbon-containing feedstock for pyrolysis thereof. Downstream of the choke a reactor tunnel is mounted having a diameter of 200 mm and has a length of 4200 mm, wherein the pyrolysis of the feedstock and formation and/or recovery of carbon black from the feedstock proceed. The furnace reactor (100) further comprises means for the injection of a quench medium (104a, 104b, 104c, 104d). Water was used as quench medium and injected through a means for the injection of a quench medium so that the reactions are terminated. The reaction volume of the reactor was about 130 liters. The reaction volume was the volume of the reactor between the position of the injection of the feedstock and the used position of the quench. Table 3 summarizes the applied reaction conditions.

Table 3:

| Combustion Air Flow (STP)[1] / $m^3$/h | 2,300 |
|---|---|
| Temperature of combustion air / °C | 715 |
| Fuel (natural gas) Flow (STP) / $m^3$/h | 213 |
| k value[2] | 0.898 |
| Nitrogen purge flow (STP) / $m^3$/h | 472 |
| Feedstock (rubber granulate) mass flow / kg/h | 318 |
| Temperature of the hot gas flow / °C | approx. 2,000 |

[1]273.15 K and 101325 Pa
[2]The k value is defined by the ratio of stoichiometric $O_2$ amount that is necessary for the complete stoichiometric combustion of the fuel to the supplied $O_2$ amount.

The thus formed carbon black was collected at the outlet of the tunnel of the reactor. An amount of 175.7 kg of carbon black material was thus produced. The produced carbon black material comprises about 53 wt.-% recovered carbon black, about 27 wt.-% of newly formed carbon black and about 20 wt.-% of ash. Recovered carbon black comprises coke. Since the rubber granulate is used in an entrained flow reactor process, it is possible to not only recover carbon black but also to produce new carbon black derived from the rubber component.

After the production of the carbon black was completed, the reactor was opened. It was surprisingly found that a colourless solid material had deposited on the heat exchanger used for preheating the combustion air, which had a temperature of about 600°C, and downstream on interior walls of the reaction tunnel in relatively cold zones of the reactor. The colourless solid material was collected, yielding an amount of roughly 30 kg. The collected colourless solid material was then pulverized with a crossbeater mill and analysed for its chemical composition.

Analysis of the chemical composition of the obtained colourless solid material involved energy dispersive X-ray spectroscopy (EDX) analysis which was conducted using a ZEISS GeminiSEM 560 field emission scanning electron microscope (Carl Zeiss Microscopy Deutschland GmbH, Germany) equipped with an Ultim Max 65 EDS detector (Oxford Instruments). Elemental quantification was performed using Aztec Software (Version 6.1, Oxford Instruments). The analyzed sample was mounted on a graphite tape holder. Analytical conditions included an aperture of 30 $\mu$m, a working distance of 8.5 mm, and an accelerating voltage of 15 kV. Secondary electron (SE2) images were acquired for sample visualization. The results of the EDX analysis are indicated in Table 4 below.

Table 4:

| Element | Mass fraction [%] |
|---------|-------------------|
| Zn      | 70.6              |
| Na      | 5.9               |
| O       | 21.7              |
| others  | 1.8               |

The EDX analysis accordingly shows that the colourless solid material formed in the reactor is a zinc oxide material. This demonstrates that it is effectively possible to recover zinc oxide material from a zinc containing carbon-based scrap material such as rubber granulate. The above illustrative example further demonstrates that such recovery of zinc oxide can moreover advantageously be implemented in a process for the production of carbon black, such as in a furnace black reactor. This allows to produce a carbon black product, and as a valuable further product recovered zinc oxide material, both from low value scrap material.

The obtained colourless solid material was further analysed by means of a fully automatic and quantitative elemental analyser specifically for its content of carbon, nitrogen, hydrogen and sulphur. The quantitative elemental analysis of the recovered zinc oxide material for C, H, N and S content was conducted as follows:

The carbon mass fraction, hydrogen fraction mass, nitrogen mass fraction and sulphur mass fraction were measured using an elemental analyser with thermal conductivity and infrared detector (vario EL cube CHNS from Elementar). The analyser is a device for the fully automatic and quantitative analysis of the above elements. The combustion tube is brought to a temperature of 1,100 °C and the reduction tube to 850 °C. First, a blank measurement is conducted. The carbon peak area should have a value < 50, the hydrogen peak area a value < 300, the nitrogen peak area a value < 50 and the sulphur peak area a value < 350. Otherwise, the individual adsorption columns are heated and then empty measurements are started again. The blank measurement is calculated as follows:

$$b = \frac{\sum b_i}{n},$$

wherein b is the blank measurement, $b_i$ is the peak area of the respective blank measurement, n is the number of blank measurements, i is an index of 1 to n.

The compensation of the blank measurement is calculated as follows,

$$acomp. = a - b,$$

wherein acomp. Is the compensated peak area, a is the measured peak area, and b is the blank measurement value.

Next, the daily factor is measured. For this purpose, 3 mg of sulphanilamide and 3 mg of low-level standard (e.g. carbon black standard) are weighed into each of 8 tin capsules. After weighing out the respective sample, it is placed in the capsule press, overlaid with helium for 35 s and then cold-sealed. Subtracting the blank value, the known theoretical element concentration of the standard samples is put in relation to the actually calculated element concentration. This results in the daily factor, which must be between 0.9 - 1.1. If this is not the case, these measurements should be repeated with newly opened standards. Otherwise, a new calibration must be carried out according to the manufacturer's instructions.

The daily factor is calculated as follows,

$$f = \frac{c_{theor.}}{c_{act.}} ,$$

Wherein f is the daily factor, $c_{theor.}$ is the theoretical factor, $c_{act.}$ is the actual calculated elemental concentration.

Then, 8 tin capsules each containing 5 mg $\pm$ 1 mg of the material to be analysed, are weighed. After weighing the respective samples, they are placed in the capsule press, covered with helium for 35 s and then cold welded.

For the measurement, the combustion tube is enriched with $O_2$. The elements C, H, N and S burn to form $CO_2$, $H_2O$, NOx, $SO_2$ and $SO_3$. Halogen bound in the sample reacts to form volatile halogen compounds. In addition, there are $WO_3$ granules in the combustion tube that provide further $O_2$ as a catalyst, prevent the formation of nonvolatile sulphates and bind interfering alkali and alkaline earth elements. The carrier gas stream is fed into the reduction tube with Cu filling. Nitrogen oxides (NOx) are completely reduced to $N_2$ at the copper contact. $SO_3$ is reduced to $SO_2$. Volatile halogen compounds are bound to the silver wool.

$N_2$ is not adsorbed and enters the thermal conductivity detector as the first measuring component, $CO_2$, $H_2O$ and $SO_2$ are adsorbed on the respective adsorption columns.

Then, one after the other, the adsorption columns are brought to desorption temperature, so that $CO_2$, then $H_2O$ as carrier gas enters the thermal conductivity detector and $SO_2$ enters the infrared detector. Depending on the type and concentration of the components, the detector delivers an electrical signal which is digitised and integrated. The measurement signal is recorded as a function of time and displayed as an integral value. The absolute element content of the sample is calculated from this integral value of the individual measurement peaks and the calibration factors.

The element concentration is calculated according to the following equation

$$c = \frac{a * 100 * f}{w} ,$$

wherein c is the elemental concentration (in %), a is the absolute element content (in mg), f is the daily factor, and w is the actual amount of the sample.

Results of the elemental analysis of the recovered zinc oxide material (rZnO) formed in the reactor are summarized in Table 5 below in comparison to the content of the respective elements determined for a commercially available virgin zinc oxide material (vZnO) as a reference material (Zinc Oxide HP Grade, from Oquema GmbH).

Table 5:

| Element | vZnO material | rZnO material |
|---|---|---|
| | Mass fraction [%] | Mass fraction [%] |
| C | 0.17 | 1.493 |
| H | 0.055 | 0.03 |
| N | 0.01 | 0.01 |
| S | 0.015 | 1.053 |

The recovered zinc oxide material accordingly exhibits a significantly higher content of carbon as well as sulphur compared to conventional virgin zinc oxide material.

*Preparation of vulcanizable rubber compositions*

The milled recovered zinc oxide material was used as-produced, i.e. without purification, in the preparation of vulcanizable rubber compositions in comparison to evaluate its usefulness and performance in comparison to virgin zinc oxide reference material. To this end, rubber compositions of the formulations set forth in Table 6 below were prepared according to the following procedure using the recovered zinc oxide material and reference virgin zinc oxide material, respectively.

Table 6:

| | Example 1 | Example 2 (Comparative) |
|---|---|---|
| | phr | phr |

(continued)

|  | Example 1 | Example 2 (Comparative) |
|---|---|---|
| Rubber[3] | 100 | 100 |
| Carbon black[4] | 50 | 50 |
| rZnO | 3 | - |
| vZnO[8] | - | 3 |
| Stearic Acid[9] | 2 | 2 |
| 6PPD[5] | 1 | 1 |
| Sulphur[6] | 1.5 | 1.5 |
| CBS[7] | 1.5 | 1.5 |

[3]Rubber ESBR, Buna SB 1500, Resinex Deutschland GmbH
[4]Carbon black: Corax N550, Orion Engineered Carbons GmbH
[5]6PPD, VULKANOX 4020/LG, Brenntag GmbH
[6]Sulphur, MAHLSCHWEFEL 80/90° unbeölt, Avokal GmbH
[7]CBS, VULKACIT CZ/EG-C, Lanxess N.V.
[8]ZnO, Zinc Oxide HP Grade, Oquema GmbH
[9]Stearic Acid, Palmera B 1804, Caldic Deutschland GmbH

The ESBR Buna SB 1500 was introduced to a laboratory mixer GK1.5E with an intermeshing PES5-rotor geometry made by Harburg Freudenberger and milled for 30 seconds at a chamber temperature of 40°C, a fill factor of 0.66 and a rotor speed of 45 rpm. Subsequently, half of the carbon black volume, the respective ZnO material and stearic acid were added under milling. After 60 seconds the other half of the carbon black volume and the 6PPD were added. After further 60 secs the ram was lifted and cleaned, and the batch was mixed for another 90 seconds. The total mixing time in the internal mixer was 5 minutes and afterwards the batch was dropped on an open mill for cooling down and additional distributive mixing. The two roll laboratory mill from company Troester was set to a roll temperature of 40 °C. The front roll was operated at 23 rpm and the back roll at 34 rpm. The compound was cut three times left and three times right and the 6 times rolled, turned 90 ° and transferred again through the nip. The batch temperature did not exceed 160°C in the first mixing step. The batch was allowed to rest overnight.

During the second and final mixing step the sulphur and the accelerator (Vulkacit CZ/EG-Z) were then added in the indicated amounts to the master batch obtained from the first mixing step. The resulting mixture was milled in the GK1.5E mixer with a chamber temperature of 40°C and a fill factor of 0.64 for 2 minutes. The rotor speed was 30 rpm and it was secured that the batch temperature did not exceed 110 °C. Finally, the mixture was dropped from the internal mixer processed again on an open mill. The two roll laboratory mill from company Troester was set to a roll temperature of 40 °C. The front roll was operated at 23 rpm and the back roll at 34 rpm. The compound was cut three times left and three times right and the 6 times rolled, turned 90 ° and transferred again through the nip.

*Curing of the vulcanizable rubber compositions*

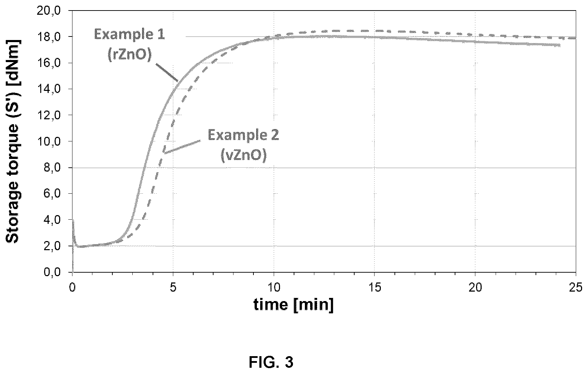

The prepared vulcanizable rubber compositions according to Table 6 were cured at a temperature of 165°C. A moving die rheometer Alpha Technologies Rheometer MDR 2000 was used to measure the torque as a function of the time at the used curing temperature of 165°C for the different investigated vulcanizable rubber compositions. The results of these measurements are shown in FIG. 3. As can be seen from FIG. 3 the rubber composition of Example 1 that contains the recovered zinc oxide material cures notably faster than the rubber composition of Comparative Example 2 that contains the reference virgin zinc oxide material. For instance, as indicated in below Table 7, the time to 90% cure (TC90) was determined to be 6.6 min in case of Example 1 as compared to 7.7 min in case of Comparative Example 2. These results illustrate that the recovered zinc oxide material is very effective in promoting the vulcanization reaction and can even have a higher activity than commercially available virgin zinc oxide material conventionally employed as activator for the vulcanization of rubber compounds.

*Characterization of the cured rubber compositions*

The cured rubber compositions according to Examples 1 and 2 were moreover investigated for their properties.
Hardness was measured according to DIN 53 505.

Tensile strength, elongation at break and Modulus 300 were measured according to ISO 37 - 2012, S2.

Topography relative peak area as a measure for filler dispersion was determined by means of surface topography, inclusive of Medalia correction, according to the procedure described in A. Wehmeier, "Filler Dispersion Analysis by Topography Measurements", Technical Report TR 820, Degussa GmbH as well as in A. Wehmeier, "Entwicklung eines Verfahrens zur Charakterisierung der Füllstoffdispersion in Gummimischungen mittels einer Oberflachentopographie", Thesis, 1998 at the Münster University of Applied Sciences, and DE 199 17975 C2.

The loss factor tan(d) and complex modulus E* were measured according to DIN 53 513 in strain-controlled mode ($1 \pm 0.5$ mm) or force-controlled mode ($50 N \pm 25 N$) on a cylindrical specimen (10 mm in height and 10 mm in diameter) at 60°C with a frequency of 16 Hz.

Heat build-up was tested according to DIN 53533 applying a pre-tension of 1 MPa and a stroke of 4.45 mm. The chamber temperature is 55 °C.

Tear Resistance was measured according to DIN ISO 34-1:2016-09, method B, variant (b).

DIN abrasion (in $mm^3$) was measured according to DIN 53 516 with a force of 10N, at 23°C.

Mooney-Viscosity (ML(1+4) 100°C) was measured according to ISO 289-1:2015.

Compression set was determined according to ISO 815:1-2019.

TC90 was determined as the time to 90% cure from the measurement of the torque as a function of the time at the used curing temperature of 165°C.

The results of the properties determined for the cured rubber compositions according to Examples 1 and 2 are summarized in Table 7 below.

Table 7:

| Property | Unit | Example 1 | Example 2 (Comparative) |
|---|---|---|---|
| ML(1+4) 100°C | MU | 65 | 65 |
| TC90 (165°C) | min | 6.6 | 7.7 |
| TOPO dispersion - defect area | % | 1.6 | 0.4 |
| Hardness | Shore A | 63 | 63 |
| Tensile strength | MPa | 22.2 | 23.6 |
| Elongation at break | % | 520 | 530 |
| M300 | MPa | 12.3 | 12.6 |
| Complex modulus E* | MPa | 8.2 | 8.0 |
| Loss Factor tan(d) | | 0.149 | 0.145 |
| Heat build-up | °C | 74 | 73 |
| Tear Resistance-GRAVES | N/mm | 22.6 | 21.8 |
| Compression set | % | 54 | 51 |
| DIN abrasion | mm3 | 78 | 80 |

The results in Table 7 illustrate that use of the recovered zinc oxide material yields equivalent properties of the resulting cured rubber compositions as compared to use of conventionally employed virgin zinc oxide material. The recovered zinc oxide material described herein accordingly can advantageously be used as a cost-effective substitute for virgin zinc oxide material in the preparation of rubber compositions, without adversely affecting the achievable properties of the resulting cured rubber compositions.

*Testing of the produced carbon black in rubber compositions*

The carbon black produced as set forth above from rubber granulate feedstock was tested in rubber compositions as compared to N660 standard carbon black produced from liquid feedstock material and a commercially available recovered carbon black. To this end further rubber compositions were prepared, cured and tested as set forth above for Example 2, but using as carbon black the N660 reference carbon black (Example 3), the recovered carbon black rCB (Example 4) or the carbon black produced as set forth above from rubber granulate feedstock (Example 5), respectively. The determined properties are summarized below in Table 8.

Table 8:

| | Unit | Example 3 (Comparative) | Example 4 (Comparative) | Example 5 |
|---|---|---|---|---|
| Carbon Black | | N660[10] | rCB[11] | CB from rubber granulate |
| Hardness | Shore A | 61 | 59 | 58 |
| Tensile strength | MPa | 20.5 | 20.8 | 23.5 |
| Elongation at break | % | 500 | 610 | 630 |
| M300 | MPa | 10.9 | 6.9 | 5.8 |
| DIN abrasion | mm3 | 93 | 129 | 119 |
| [10]N660 carbon black obtained from liquid feedstock materials, Orion Engineered Carbons GmbH [11]rCB recovered carbon black RCB-615, REOIL S.P. Z O.O. | | | | |

This illustrates that carbon blacks can successfully be manufactured from particulate scrap material feedstocks such as rubber granulate feedstock and that these carbon blacks can be useful as reinforcing filler for rubber compositions like conventional carbon blacks produced from conventional feedstocks or commercially available (recovered) carbon black.

Although exemplary specific variants may have been described in the present disclosure above for illustrative purposes, it is to be understood that the present disclosure is to be construed over the entire scope of the appended claims including any variations thereof under the doctrine of equivalents.

**Claims**

1.  A process for recovering zinc oxide material from a zinc containing carbonaceous material, the process comprising:

    (a) providing a zinc containing carbonaceous material;
    (b) heat treating the zinc containing carbonaceous material in a gas atmosphere to thereby transfer at least a part of the zinc contained by the carbonaceous material into the gas atmosphere; and
    (c) depositing a zinc oxide material from said gas atmosphere.

2.  A process for producing carbon black with recovery of zinc oxide material, the process comprising:

    (a) supplying a zinc containing carbonaceous feedstock to a reactor;
    (b) pyrolyzing the zinc containing carbonaceous feedstock in a gas atmosphere in the reactor to form and/or recover carbon black and transfer at least part of the zinc contained by the carbonaceous feedstock into the gas atmosphere;
    (c) separating the formed and/or recovered carbon black from the gas atmosphere; and
    (d) depositing a zinc oxide material from said gas atmosphere.

3.  The process according to any one of claims 1 or 2, wherein the zinc containing carbonaceous material or feedstock is provided in particulate form, wherein preferably at least 70 wt.-%, more preferably at least 80 wt.-%, or at least 90 wt.-%, or at least 98 wt.-%, of the zinc containing carbonaceous material or feedstock has a particle size of less than 2 mm, preferably less than 1 mm, more preferably less than 500 μm, and most preferably less than 250 μm, wherein the particle size is measured according to ASTM D 1511-12 (2017).

4.  The process according to any one of claims 1 to 3, wherein the zinc containing carbonaceous material or feedstock comprises an organic material, such as plastic and/or rubber material, and/or comprises an inorganic carbon-based material, such as carbon black.

5.  The process according to any one of claims 1 to 4, wherein the zinc containing carbonaceous material or feedstock comprises a scrap material, such as a scrap plastic material and/or scrap rubber material.

6.  The process according to any one of claims 1 to 5, wherein the zinc containing carbonaceous material or feedstock comprises a plastic granulate, rubber granulate or a combination or mixture thereof, wherein the plastic and/or rubber granulate can optionally comprise an inorganic carbon-based material such as carbon black, wherein the zinc containing carbonaceous material or feedstock preferably comprises a rubber granulate, more preferably a rubber granulate made from scrap tires and/or other waste rubber.

7. The process according to any one of claims 1 to 6, wherein the zinc containing carbonaceous material or feedstock comprises zinc in the form of zinc compounds and/or salts, and/or comprises zinc in an amount of 0.1 wt.% to 10 wt.%, such as 0.3 wt.% to 5.0 wt.%, or 0.5 wt.% to 4.0 wt.%, or 1.0 to 3.0 wt.%, based on the total mass of the zinc containing carbonaceous material or feedstock.

8. The process according to any one of claims 1 to 7, wherein step (b) comprises heat treating the zinc containing carbonaceous material or feedstock at a temperature of 1,000°C or more, such as at a temperature in a range from 1,000°C to 3,000°C, preferably 1,400°C to 2,700°C, most preferably 1,800°C to 2,500°C.

9. The process according to any one of claims 1 to 8, wherein step (b) is conducted in a gas flow, and/or wherein the gas atmosphere comprises one or more oxygen-containing species, optionally further comprising one or more non-oxygen containing species.

10. The process according to any one of claims 1 to 9, comprising injecting the zinc containing carbonaceous material or feedstock into a hot gas flow, wherein the hot gas flow preferably has a temperature of 1,000°C or more, such as a temperature in a range from 1,000°C to 3,000°C, preferably 1,400°C to 2,700°C, most preferably 1,800°C to 2,500°C, wherein the hot gas flow is preferably produced by combustion of a combustible fuel with an oxygen containing gas, the process optionally further comprising quenching the hot gas flow after injecting the zinc containing carbonaceous material or feedstock, wherein quenching preferably comprises injecting a quenching medium into the hot gas flow.

11. The process according to any one of claims 1 to 10, wherein the step of depositing a zinc oxide material from the gas atmosphere comprises contacting the gas atmosphere with a deposition surface or medium exhibiting a lower temperature than the gas atmosphere to deposit the recovered zinc oxide material from said gas atmosphere on said deposition surface or in said deposition medium, wherein preferably the deposition surface or medium is cooled and/or has a temperature of less than 1,000°C, such as in a range from 600 to less than 1,000°C.

12. The process according to any one of claims 1 to 11, wherein the process is carried out in an entrained flow reactor, preferably a vertical reactor or furnace reactor.

13. A recovered zinc oxide material obtainable by a process according to any one of claims 1 to 12, wherein the recovered zinc oxide material preferably has a carbon content of 0.5 wt.% or more and/or a sulfur content of 0.5 wt.% or more, based on the total mass of the recovered zinc oxide material

14. A process for manufacture of a zinc salt or compound comprising reacting the recovered zinc oxide material according to claim 13 with one or more reactive agents to form a zinc salt or compound different from zinc oxide, such as a zinc soap.

15. A vulcanizable rubber composition comprising a vulcanizable rubber component and one or more of the recovered zinc oxide material according to claim 13 and/or a zinc salt or compound formed therefrom according to the process of claim 14.

16. An article prepared from a vulcanizable rubber composition according to claim 15, such as a tire, a tire component, a cable sheath, a tube, a drive belt, a conveyor belt, a roll covering, a shoe sole, a sealing member, a profile or a damping element.

17. Use of a zinc containing carbonaceous material, such as a zinc containing carbonaceous material as defined in any one of claims 3 to 7, as a feedstock for producing carbon black and/or for recovering zinc oxide material.

18. Use of a recovered zinc oxide material according to claim 13 as vulcanization activator, pigment, UV light absorber, bacteriostat, corrosion inhibitor, catalyst, and/or for the production of plastic compositions, rubber compositions, glass, ceramics, cements, paints, sunscreens, medical, pharmaceutical or cosmetic products, food supplements, pigments, or zinc compounds or salts, such as zinc soaps.

FIG. 1

EP 4 674 916 A1

FIG. 2

FIG. 3

**EUROPEAN SEARCH REPORT**

Application Number

EP 24 18 6957

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/083953 A1 (HORN JOEL [US] ET AL) 14 April 2011 (2011-04-14) * paragraphs [0009] - [0011], [0024] - [0069] * * figures 1,1b,1c * | 1-18 | INV. C09C1/04 C01G9/02 C09C1/50 |
| X | WO 2024/132440 A1 (ORION ENG CARBONS GMBH [DE]) 27 June 2024 (2024-06-27) * claims 1-3,5,7,9,11-15 * * paragraphs [0014] - [0084] * * examples 1,2 * * tables 1,4,5 * | 1-13, 15-18 | |
| X | US 4 316 852 A (BLACHFORD JOHN) 23 February 1982 (1982-02-23) * examples 1,3,4,6 * | 13,14 | |
| X | US 9 175 174 B2 (NANOGRAM CORP [US]) 3 November 2015 (2015-11-03) * figure 93; example 27 * | 13 | |
| X | US 9 580 606 B2 (BLACK BEAR CARBON B V [NL]) 28 February 2017 (2017-02-28) * column 2, line 26 - column 4, line 38 * * column 9, line 56 - column 19 * * tables 2,7,10 * | 1-18 | TECHNICAL FIELDS SEARCHED (IPC) C09C C01G |

The present search report has been drawn up for all claims

| Place of search | Date of completion of the search | Examiner |
|---|---|---|
| The Hague | 27 November 2024 | Marino, Emanuela |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 18 6957

This annex lists the patent family members relating to the patent documents cited in the above-mentioned European search report.
The members are as contained in the European Patent Office EDP file on
The European Patent Office is in no way liable for these particulars which are merely given for the purpose of information.

27-11-2024

| Patent document cited in search report | | Publication date | Patent family member(s) | | Publication date |
|---|---|---|---|---|---|
| US 2011083953 | A1 | 14-04-2011 | CA | 2776547 A1 | 21-04-2011 |
| | | | CN | 102770509 A | 07-11-2012 |
| | | | CN | 104650932 A | 27-05-2015 |
| | | | EP | 2488605 A1 | 22-08-2012 |
| | | | ES | 2795004 T3 | 20-11-2020 |
| | | | HK | 1206054 A1 | 31-12-2015 |
| | | | PL | 2488605 T3 | 25-01-2021 |
| | | | US | 2011083953 A1 | 14-04-2011 |
| | | | US | 2015139889 A1 | 21-05-2015 |
| | | | WO | 2011047068 A1 | 21-04-2011 |
| WO 2024132440 | A1 | 27-06-2024 | NONE | | |
| US 4316852 | A | 23-02-1982 | CA | 1116183 A | 12-01-1982 |
| | | | GB | 2047731 A | 03-12-1980 |
| | | | US | 4316852 A | 23-02-1982 |
| US 9175174 | B2 | 03-11-2015 | US | 2010209328 A1 | 19-08-2010 |
| | | | US | 2014047996 A1 | 20-02-2014 |
| US 9580606 | B2 | 28-02-2017 | BR | 112014014978 A2 | 13-06-2017 |
| | | | CN | 104125988 A | 29-10-2014 |
| | | | EP | 2794766 A1 | 29-10-2014 |
| | | | ES | 2675128 T3 | 06-07-2018 |
| | | | PL | 2794766 T3 | 28-09-2018 |
| | | | US | 2014371385 A1 | 18-12-2014 |
| | | | US | 2017114222 A1 | 27-04-2017 |
| | | | WO | 2013095145 A1 | 27-06-2013 |

EPO FORM P0459

For more details about this annex : see Official Journal of the European Patent Office, No. 12/82

# EP 4 674 916 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20020117388 A1
- US 4316852 A
- DE 19917975 C2

### Non-patent literature cited in the description

- Industrial Carbon and Graphite Materials: Raw Materials. Production and Applications. Wiley VCH, 2021, vol. II
- Industrial Carbon and Graphite Materials: Raw Materials, Production and Applications. Wiley VCH, 2021, vol. II
- Entwicklung eines Verfahrens zur Charakterisierung der Füllstoffdispersion in Gummimischungen mittels einer Oberflachentopographie. **A. WEHMEIER**. Thesis. University of Applied Sciences, 1998